(19) **Europäisches Patentamt / European Patent Office / Office européen des brevets**

(11) **EP 4 683 418 A1**

(12) # EUROPEAN PATENT APPLICATION
published in accordance with Art. 153(4) EPC

(43) Date of publication:
**21.01.2026 Bulletin 2026/04**

(21) Application number: **23926779.2**

(22) Date of filing: **15.03.2023**

(51) International Patent Classification (IPC):
***H04W 72/25*** *(2023.01)*

(52) Cooperative Patent Classification (CPC):
**H04W 72/25**

(86) International application number:
**PCT/CN2023/081718**

(87) International publication number:
**WO 2024/187423 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Guangdong OPPO Mobile Telecommunications Corp., Ltd.**
**Wusha, Chang'an, Dongguan 523860 (CN)**

(72) Inventors:
• **ZHANG, Shichang**
  **Dongguan, Guangdong 523860 (CN)**
• **ZHANG, Zhi**
  **Dongguan, Guangdong 523860 (CN)**

(74) Representative: **RGTH**
**Patentanwälte PartGmbB**
**Neuer Wall 10**
**20354 Hamburg (DE)**

(54) **COMMUNICATION METHOD AND COMMUNICATION APPARATUS**

(57)     Provided are a communication method and a communication apparatus. The method comprises: a first terminal device receiving a first physical sidelink control channel (PSCCH) in a first time slot, wherein the first PSCCH is used for scheduling a first physical sidelink shared channel (PSSCH); and the first terminal device receiving the first PSSCH in a second time slot according to the first PSCCH, wherein an interval between the first time slot and the second time slot is greater than or equal to X time slots, X being a positive integer. By means of the method in the embodiments of the present application, a reduction in the power consumption of a terminal device during sidelink communication is facilitated.

FIG. 12

**Description**

## TECHNICAL FIELD

The present application relates to the field of communication technology, and in particular, to a communication method and a communication apparatus.

## BACKGROUND

With the continuous development of communication technology, the applications of sidelink (SL) communication are becoming increasingly widespread, and power consumption of terminal devices in sidelink communication has attracted more and more attention. However, how to reduce the power consumption of the terminal devices in the sidelink communication has become an urgent technical problem to be solved.

## SUMMARY

Embodiments of the present application provide a communication method and a communication apparatus. Various aspects of the embodiments of the present application are described below.

In a first aspect, a communication method is provided, and the method includes: receiving, by a first terminal device, a first physical sidelink control channel (PSCCH) in a first slot, the first PSCCH being used to schedule a first physical sidelink shared channel (PSSCH); and receiving, by the first terminal device, the first PSSCH in a second slot according to the first PSCCH. An interval between the first slot and the second slot is greater than or equal to X slots, and X is a positive integer.

In a second aspect, a communication method is provided, and the method includes: transmitting, by a second terminal device, a first PSCCH in a first slot, the first PSCCH being used to schedule a first PSSCH; and transmitting, by the second terminal device, the first PSSCH in a second slot. An interval between the first slot and the second slot is greater than or equal to X slots, and X is a positive integer.

In a third aspect, a communication method is provided, and the method includes: detecting, by a first terminal device, first sidelink control information (SCI) in a first slot; and determining, by the first terminal device, according to the first SCI, whether to detect second SCI in the first slot.

In a fourth aspect, a communication method is provided, and the method includes: transmitting, by a second terminal device, first SCI in a first slot; and determining, by the second terminal device, according to the first SCI, whether to transmit second SCI in the first slot.

In a fifth aspect, a communication method is provided, and the method includes: receiving, by a first terminal device, a first PSSCH according to first information, the first PSSCH corresponds to a first demodulation reference signal (DMRS); and decoding, by the first terminal device, the first PSSCH according to the first DMRS. The first information includes one or more of: the first DMRS, time-frequency positions of the first DMRS, sidelink configuration authorization information, a size of frequency domain resources occupied by the first PSSCH, a modulation and coding scheme (MCS) used by the first PSSCH, a sequence corresponding to the first DMRS, time-frequency positions of the first DMRS, a code rate used by second-order SCI corresponding to the first PSSCH, and a size of a transport block (TB) transmitted by the first PSSCH.

In a sixth aspect, a communication method is provided, and the method includes: transmitting, by a second terminal device, a first PSSCH according to first information. The first PSSCH corresponds to a first DMRS. The first information includes one or more of: the first DMRS, time-frequency positions of the first DMRS, sidelink configuration authorization information, a size of frequency domain resources occupied by the first PSSCH, an MCS used by the first PSSCH, a sequence corresponding to the first DMRS, time-frequency positions of the first DMRS, a code rate used by second-order SCI corresponding to the first PSSCH, and a size of a TB transmitted by the first PSSCH.

In a seventh aspect, a communication apparatus is provided, and the communication apparatus includes a receiving unit. The receiving unit is configured to receive a first PSCCH in a first slot, and the first PSCCH is used to schedule a first PSSCH. The receiving unit is configured to receive the first PSSCH in a second slot according to the first PSCCH. An interval between the first slot and the second slot is greater than or equal to X slots, and X is a positive integer.

In an eighth aspect, a communication apparatus is provided, and the communication apparatus includes a transmitting unit. The transmitting unit is configured to transmit a first PSCCH in a first slot, and the first PSCCH is used to schedule a first PSSCH. The transmitting unit is configured to transmit the first PSSCH in a second slot. An interval between the first slot and the second slot is greater than or equal to X slots, and X is a positive integer.

In a ninth aspect, a communication apparatus is provided, and the communication apparatus includes a detecting unit and a determining unit. The detecting unit is configured to detect first SCI in a first slot. The determining unit is configured to determine, according to the first SCI, whether to detect second SCI in the first slot.

In a tenth aspect, a communication apparatus is provided, and the communication apparatus includes a transmitting unit and a determining unit. The transmitting unit is configured to transmit first SCI in a first slot. The determining unit is configured to determine, according to the first SCI, whether to transmit second SCI in the first slot.

In an eleventh aspect, a communication apparatus is provided, and the communication apparatus includes a receiving unit and a decoding unit. The receiving unit is configured to receive a first PSSCH according to first information. The first PSSCH corresponds to a first DMRS. The decoding unit is configured to decode the first PSSCH according to the first DMRS. The first information includes one or more of: the first DMRS, time-frequency positions of the first DMRS, sidelink configuration authorization information, a size of frequency domain resources occupied by the first PSSCH, an MCS used by the first PSSCH, a sequence corresponding to the first DMRS, time-frequency positions of the first DMRS, a code rate used by second-order SCI corresponding to the first PSSCH, and a size of a TB transmitted by the first PSSCH.

In a twelfth aspect, a communication apparatus is provided, and the communication apparatus includes a transmitting unit. The transmitting unit is configured to transmit a first PSSCH according to first information. The first PSSCH corresponds to a first DMRS. The first information includes one or more of: the first DMRS, time-frequency positions of the first DMRS, sidelink configuration authorization information, a size of frequency domain resources occupied by the first PSSCH, an MCS used by the first PSSCH, a sequence corresponding to the first DMRS, time-frequency positions of the first DMRS, a code rate used by second-order SCI corresponding to the first PSSCH, and a size of a TB transmitted by the first PSSCH.

In a thirteenth aspect, a communication apparatus is provided, and the communication apparatus includes a memory, a transceiver and a processor. The memory is configured to store a program, the processor receives and transmits data through the transceiver, and the processor is configured to call the program in the memory to cause the communication apparatus to perform the method according to any one of the first aspect to the sixth aspect.

In a fourteenth aspect, a communication apparatus is provided, and the communication apparatus includes a processor. The processor is configured to call a program from a memory to cause the communication apparatus to perform the method according to any one of the first aspect to the sixth aspect.

In a fifteenth aspect, a chip is provided, and the chip includes a processor. The processor is configured to call a program from a memory to cause an apparatus equipped with the chip to perform the method according to any one of the first aspect to the sixth aspect.

In a sixteenth aspect, a computer-readable storage medium is provided. The computer-readable storage medium stores a program thereon, and the program causes a computer to perform the method according to any one of the first aspect to the sixth aspect.

In a seventeenth aspect, a computer program product is provided. The computer program product includes a program, and the program causes a computer to perform the method according to any one of the first aspect to the sixth aspect.

In an eighteenth aspect, a computer program is provided. The computer program causes a computer to perform the method according to any one of the first aspect to the sixth aspect.

In the embodiments of the present application, the first terminal device receives the first PSSCH in the second slot according to the first PSCCH without caching the PSSCH in each slot, thereby helping to reduce power consumption of the terminal device in sidelink communication.

## BRIEF DESCRIPTION OF THE DRAWINGS

FIG. 1 is an exemplary diagram of a wireless communication system to which the embodiments of the present application are applied.
FIG. 2 is a schematic diagram showing part of symbols in one slot used for sidelink transmission.
FIG. 3 is a schematic diagram showing a PSCCH and PSSCH slot structure.
FIG. 4 is a schematic diagram showing time domain positions of 4 DMRS symbols in a case where the number of PSSCH symbols is 13.
FIG. 5 is a schematic diagram showing frequency domain positions of PSSCH DMRS.
FIG. 6 is a schematic diagram of a PSCCH and PSSCH resource pool in NR-V2X.
FIG. 7 is a schematic diagram showing a slot structure in an NR system.
FIG. 8 is a schematic diagram of time domain resources in NR-V2X.
FIG. 9 is a schematic diagram of interlaced resource blocks.
FIG. 10 is a schematic diagram showing a frame structure based on interlaced resource blocks.
FIG. 11 is a schematic diagram of a resource block (RB) set on an unlicensed spectrum.
FIG. 12 is a schematic flowchart of a communication method provided in an embodiment of the present application.
FIG. 13 is a schematic diagram of OFDM symbols for PSCCH in an embodiment of the present application.

FIG. 14 is a schematic diagram of OFDM symbols for PSCCH in another embodiment of the present application.

FIG. 15 is a schematic flowchart of a communication method provided in another embodiment of the present application.

FIG. 16 is a schematic flowchart of a communication method provided in yet another embodiment of the present application.

FIG. 17 is a schematic diagram showing a structure of a communication apparatus provided in an embodiment of the present application.

FIG. 18 is a schematic diagram showing a structure of a communication apparatus provided in another embodiment of the present application.

FIG. 19 is a schematic diagram showing a structure of a communication apparatus provided in yet another embodiment of the present application.

FIG. 20 is a schematic diagram showing a structure of a communication apparatus provided in yet another embodiment of the present application.

FIG. 21 is a schematic diagram showing a structure of a communication apparatus provided in yet another embodiment of the present application.

FIG. 22 is a schematic diagram showing a structure of a communication apparatus provided in yet another embodiment of the present application.

FIG. 23 is a schematic diagram showing a structure of an apparatus provided in an embodiment of the present application.

## DETAILED DESCRIPTION

Technical solutions of the present application will be described below in conjunction with accompanying drawings.

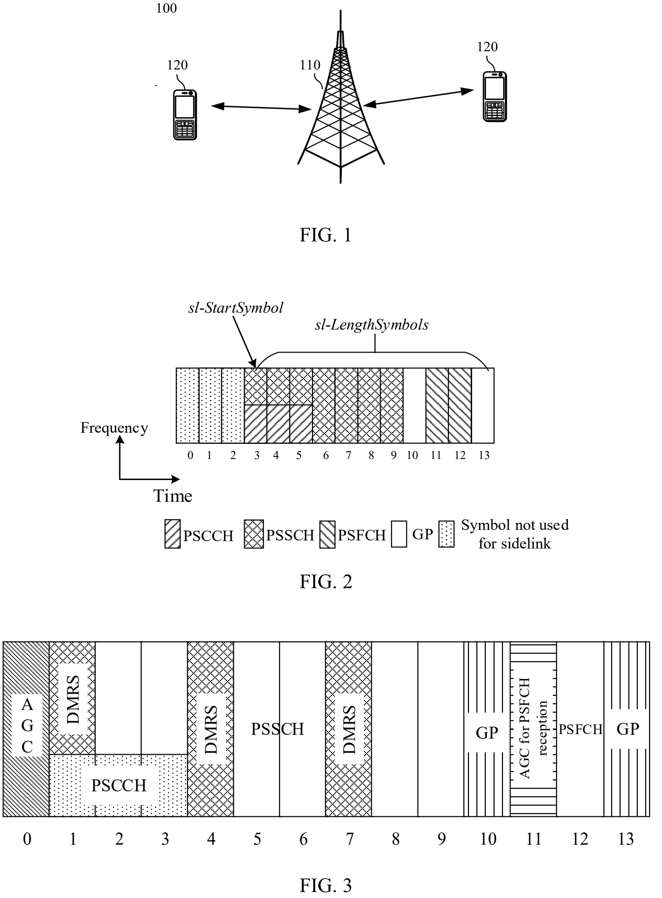

FIG. 1 is a wireless communication system 100 to which the embodiments of the present application are applied. The wireless communication system 100 may include a network device 110 and a user equipment (UE) 120. The network device 110 may communicate with the UE 120. The network device 110 may provide communication coverage for a specific geographic area and may communicate with the UE 120 located within the coverage area. The UE 120 may access a network (e.g., a wireless network) through the network device 110.

FIG. 1 exemplarily shows one network device and two UEs. Optionally, the wireless communication system 100 may include a plurality of network devices and there are other number of terminal devices within a coverage area of each network device, which is not limited in the embodiments of the present application. Optionally, the wireless communication system 100 may further include other network entities such as a network controller and a mobility management entity, which is not limited in the embodiments of the present application.

It should be understood that the technical solutions in the embodiments of the present application may be applied to various communication systems, such as a 5th generation (5G) system, or new radio (NR), a long term evolution (LTE) system, an LTE frequency division duplex (FDD) system, an LTE time division duplex (TDD). The technical solutions provided in the present application may also be applied to future communication systems, such as a 6th generation mobile communication system, a satellite communication system.

The UE in the embodiments of the present application may also be referred to as a terminal device, an access terminal, a user unit, a user station, a mobile platform, a mobile station (MS), a mobile terminal (MT), a remote station, a remote terminal, a mobile device, a user terminal, a terminal, a wireless communication device, a user agent or a user apparatus. The UE in the embodiments of the present application may refer to a device that provides voice and/or data connectivity for a user, and may be used to connect people, objects, and machines, such as a handheld device or a vehicle-mounted device with a wireless connection function. The UE in the embodiments of the present application may be a mobile phone, a pad, a laptop computer, a personal digital assistant, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in a smart grid, a wireless terminal in transportation safety, a wireless terminal in a smart city, a wireless terminal in a smart home, or the like. Optionally, the UE may be configured to act as a base station. For example, the UE may act as a scheduling entity that provides sidelink signals between UEs in V2X or D2D, etc. For example, cellular phones and cars communicate with each other using sidelink signals. Cellular phones and smart home devices communicate with each other without relaying the communication signal through a base station.

The network device in the embodiments of the present application may be a device for communicating with a UE, and the network device may also be referred to as an access network device or a wireless access network device. For example, the network device may be a base station. The network device in the embodiments of the present application may refer to a radio access network (RAN) node (or device) that accesses a UE to a wireless network. The base station may broadly cover the following various names, or be replaced with the following names, such as NodeB, evolved NodeB (eNB), next generation NodeB (gNB), relay station, access point, transmitting and receiving point (TRP), transmitting point (TP), master station (MeNB), secondary station (SeNB), multi-standard radio (MSR) node, home base station, network controller, access node, wireless node, access point (AP), transmission node, transceiver node, base band unit (BBU), remote radio unit (RRU), active antenna unit (AAU), remote radio head (RRH), central unit (CU), distributed unit (DU), positioning node. The base station may be a macro base station, a micro base station, a relay node, a donor node, or the like, or a combination thereof.

In some embodiments, the network device may be fixed or mobile. For example, a helicopter or drone may be configured to act as a mobile network device, and one or more cells may move based on a location of the mobile network device. In other examples, the helicopter or drone may be configured to function as a device for communicating with another network device. In some embodiments, the network device may refer to a CU or a DU, or the network device may include a CU and a DU, or the network device may further include an AAU.

It should be understood that the network device may be deployed on land, including indoors or outdoors, in handheld or vehicle-mounted form. The network device may also be deployed on the water. The network device may also be deployed on an airplane, a balloon and a satellite in air. The embodiments of the present application do not limit the network device and scenarios in which it is located.

It should also be understood that all or part of the functions of the network device and UE in the present application may also be implemented through software functions running on hardware, or through virtualization functions instantiated on a platform (e.g., a cloud platform).

The technical solutions in the embodiments of the present application may be applied to a sidelink (SL). New radio vehicle to everything (NR-V2X) is a sidelink transmission technology used in vehicular wireless communication. The sidelink is described below by taking NR-V2X as an example.

In NR-V2X, a physical sidelink shared channel (PSSCH) and its associated physical sidelink control channel (PSCCH) are transmitted in a same slot, and the PSCCH occupies 2 or 3 time domain symbols. Time domain resource allocation in NR-V2X takes slot as an allocation granularity. For example, a starting point and length of the time domain symbols for sidelink transmission in one slot may be configured through parameters sl-startSLsymbols and sl-lengthSLsymbols respectively. The last symbol in these symbols is used as a guard period (GP) symbol, and the PSSCH and PSCCH can only use remaining time domain symbols. However, if a physical sidelink feedback channel (PSFCH) transmission resource is configured in one slot, the PSSCH and PSCCH cannot occupy time domain symbols for the PSFCH transmission, as well as an automatic gain control (AGC) symbol and a GP symbol before the symbols.

As shown in FIG. 2, the network configures sl-StartSymbol=3, and sl-LengthSymbols=11. That is, 11 time domain symbols starting from symbol index 3 in a slot may be used for sidelink transmission. There are PSFCH transmission resources in the slot, and PSFCH occupies symbols 11 and 12. The symbol 11 is used as an AGC symbol of the PSFCH, and symbols 10 and 13 are used as GPs. Time domain symbols that may be used for PSSCH transmission are symbols 3 to 9. PSCCH occupies 3 time domain symbols, i.e., symbols 3, 4, and 5, and the symbol 3 is usually used as the AGC symbol.

In NR-V2X, in addition to PSCCH and PSSCH, there may be PSFCH in a sidelink slot. As shown in FIG. 3, it may be seen that in a slot, the first orthogonal frequency division multiplexing (OFDM) symbol is fixed for AGC. On the AGC symbol, the UE copies information transmitted on the second symbol. The last symbol in the slot is reserved for transmitting/receiving transition, which is used for the UE to transition from a transmitting (or receiving) state to a receiving (or transmitting) state. In the remaining OFDM symbols, PSCCH may occupy two or three OFDM symbols starting from the second sidelink symbol. In the frequency domain, the number of physical resource blocks (PRBs) occupied by PSCCH is within a subband range of one PSSCH. If the number of PRBs occupied by the PSCCH is less than a size of one sub-channel of the PSSCH, or frequency domain resources of the PSSCH include a plurality of sub-channels, the PSCCH may be frequency division multiplexed with the PSSCH on the OFDM symbols where the PSCCH is located.

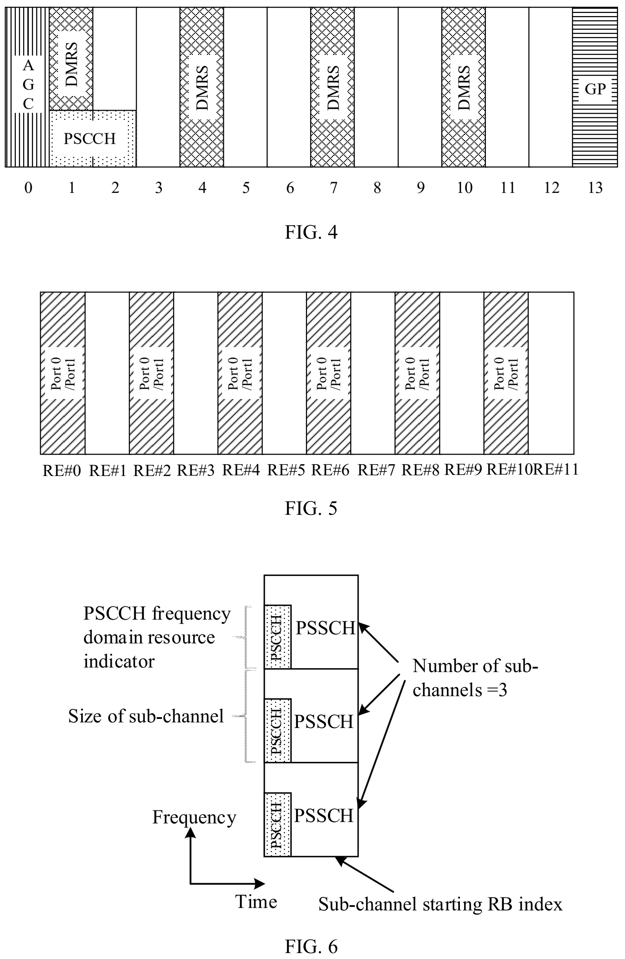

A demodulation reference signal (DMRS) of the PSSCH in NR-V2X draws on a design in an NR Uu interface, and uses a plurality of time domain PSSCH DMRS patterns. In one resource pool, the number of available DMRS patterns is related to the number of PSSCH symbols in the resource pool. For a specific number of PSSCH symbols (including the first AGC symbol) and a specific number of PSCCH symbols, the available DMRS patterns and a position of each DMRS symbol in the patterns are shown in Table 1. FIG. 4 shows a schematic diagram of time domain positions of 4 DMRS symbols when the number of PSSCH symbols is 13.

Table 1 Number and positions of DMRS symbols under different numbers of PSSCH symbols and PSCCH symbols

| Number of PSSCH symbols (including the first AGC symbol) | Positions of DMRS symbols (relative to the position of the first AGC symbol) | | | | | |
|---|---|---|---|---|---|---|
| | Number of PSCCH symbols being 2 | | | Number of PSCCH symbols being 3 | | |
| | Number of DMRS symbols | | | Number of DMRS symbols | | |
| | 2 | 3 | 4 | 2 | 3 | 4 |
| 6 | 1, 5 | | | 1, 5 | | |

(continued)

| Number of PSSCH symbols (including the first AGC symbol) | Positions of DMRS symbols (relative to the position of the first AGC symbol) | | | | | |
|---|---|---|---|---|---|---|
| | Number of PSCCH symbols being 2 | | | Number of PSCCH symbols being 3 | | |
| | Number of DMRS symbols | | | Number of DMRS symbols | | |
| | 2 | 3 | 4 | 2 | 3 | 4 |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

If a plurality of time domain DMRS patterns are configured in the resource pool, the specific time domain DMRS pattern to be used is selected by the transmitting UE and indicated in first-order SCI. Such a design allows a UE running at a high speed to select a high-density DMRS pattern, thereby ensuring accuracy of channel estimation. A UE running at a low speed may use a low-density DMRS pattern, thereby improving spectrum efficiency.

A generation manner of the PSSCH DMRS sequence is almost identical to that of the PSCCH DMRS sequence.

The only difference is that in an initialization formula $c_{\text{init}}$ of a pseudo-random sequence $c(m)$, $N_{ID} = \sum_{i=0}^{L-1} p_i \cdot 2^{L-1-i}$, where $p_l$ is an i-th cyclic redundancy check (CRC) of the PSCCH for scheduling the PSSCH, $L$ is the number of bits of the PSCCH CRC, and $L$=24.

In NR, a physical downlink shared channel (PDSCH) and a physical uplink shared channel (PUSCH) support two frequency domain DMRS patterns, namely DMRS frequency domain type 1 and DMRS frequency domain type 2. For each frequency domain type, there are two different types: single DMRS symbols and double DMRS symbols. Single symbol DMRS frequency domain type 1 supports 4 DMRS ports, and single symbol DMRS frequency domain type 2 may support 6 DMRS ports. In a case of the double DMRS symbols, the number of supported ports is doubled. However, in NR-V2X, since the PSSCH only needs to support at most two DMRS ports, only the single symbol DMRS frequency domain type 1 is supported, as shown in FIG. 5.

Similar to LTE-V2X, frequency domain resources in an NR-V2X resource pool are also continuous, and an allocation granularity of the frequency domain resources is also sub-channel. The number of PRBs included in one sub-channel is {10, 12, 15, 20, 50, 75, 100}. The minimum sub-channel size is 10 PRB, which is much larger than the minimum sub-channel size of 4 PRB in LTE-V2X. This is mainly because the frequency domain resources of PSCCH in NR-V2X are located in a first sub-channel of a PSSCH associated with the PSCCH, and a size of the frequency domain resources of the PSCCH is less than or equal to a size of one sub-channel of the PSSCH. The time domain resources of the PSCCH occupy 2 or 3 OFDM symbols. If the sub-channel size is configured to be relatively small, there will be few available resources for the PSCCH, a code rate will be improved, and a detection performance of the PSCCH will be reduced. In NR-V2X, the size of the PSSCH sub-channel and the size of the frequency domain resources of the PSCCH are configured independently. However, it is necessary to ensure that the size of the frequency domain resources of the PSCCH is less than or equal to the sub-channel size of the PSSCH. The following configuration parameters in the NR-V2X resource pool configuration information are used to determine the frequency domain resources in the PSCCH and PSSCH resource pool:

- sub-channel size (sl-SubchannelSize): indicating the number of consecutive PRBs included in one sub-channel in the resource pool, the value being in a range of {10, 12, 15, 20, 50, 75, 100} PRB;
- the number of sub-channels (sl-NumSubchannel): indicating the number of sub-channels included in the resource pool;
- sub-channel starting RB index (sl-StartRB-Subchannel): indicating a starting PRB index of the first sub-channel in the resource pool;
- the number of PRBs (sl-RB-Number): indicating the number of consecutive PRBs included in the resource pool; and
- PSCCH frequency domain resource indicator (sl-FreqResourcePSCCH): indicating a size of frequency domain resources of the PSCCH, the value being in a range of {10, 12, 15, 20, 25} PRB.

When the UE determines a resource pool for PSSCH transmitting or PSSCH receiving, frequency domain resources included in the resource pool are sl-NumSubchannel consecutive sub-channels starting from the PRB indicated by sl-StartRB-Subchannel. If the number of PRBs contained in the final sl-NumSubchannel consecutive sub-channels is less than the number of PRBs indicated by sl-RB-Number, the remaining PRBs cannot be used for the PSSCH transmitting or receiving.

In NR-V2X, frequency domain starting positions of first sub-channels of PSCCH and its associated PSSCH are aligned. Therefore, as shown in FIG. 6, a starting position of each PSSCH sub-channel is a possible frequency domain starting position of a PSCCH. A frequency domain range of the resource pool of PSCCH and PSSCH may be determined according to the above parameters.

In NR-V2X, PSCCH is used to carry sidelink control information related to resource sensing, including:

- a priority of a scheduled transmission;
- a frequency domain resource allocation, indicating the number of frequency domain resources of the PSSCH scheduled by the PSCCH in the current slot, and the number and starting position of frequency domain resources of up to two retransmission resources reserved;
- a time domain resource allocation, indicating time domain positions of up to two retransmission resources;
- a reference signal pattern of PSSCH;
- a format of second-order SCI;
- a rate offset of second-order SCI (e.g., SCI 2-A or SCI 2-B);
- the number of PSSCH DMRS ports;
- modulation and coding scheme (MCS);
- MCS form indication;
- the number of PSFCH symbols;
- a resource reservation period, reserving resources for transmitting another transport block (TB) in a next period, and if inter-TB resource reservation is not activated in the resource pool configuration, the information bit field not existing.
- reserved bits: 2 to 4 bits, the specific number of bits being configured or pre-configured by a network.

Since the PSCCH is always transmitted in the same slot as the scheduled PSSCH, and the starting position of the PRB occupied by the PSCCH is the starting position of the first sub-channel of the scheduled PSSCH, the SCI format 1-A does not explicitly indicate a time-frequency domain starting position of the scheduled PSSCH.

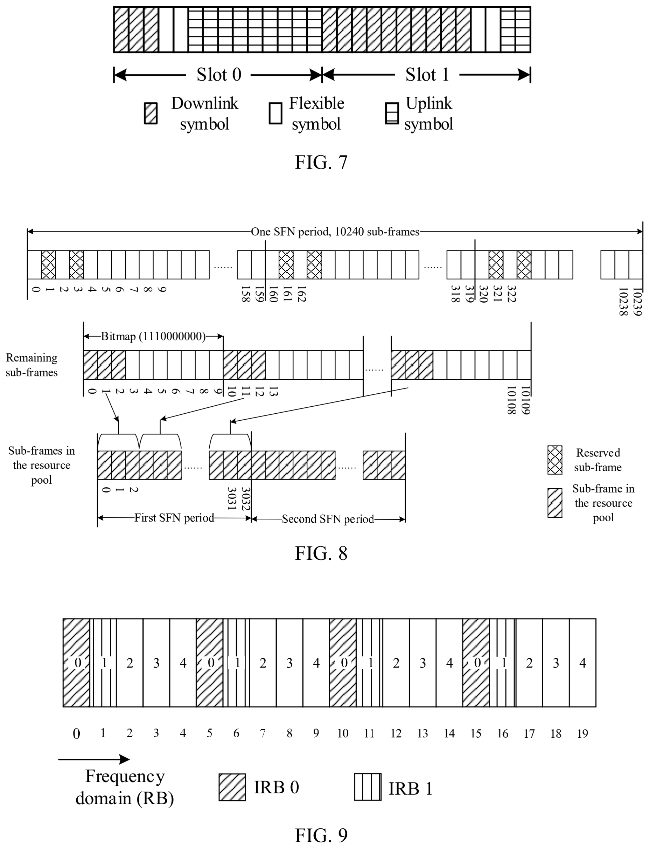

In NR-V2X, the transmission of PSCCH/PSSCH is based on a slot level. That is, only one PSCCH/PSSCH may be transmitted in one slot. It does not support the transmission of a plurality of PSCCHs/PSSCHs in one slot through time-division multiplexing (TDM). The PSCCH/PSSCH between different users may be multiplexed in one slot through frequency-division multiplexing (FDM). The time domain resources of PSSCH in NR-V2X are based on a slot granularity. However, unlike LTE-V2X where the PSSCH occupies all time domain symbols in one sub-frame, the PSSCH in NR-V2X may occupy part of the symbols in one slot. Because in the LTE system, uplink transmission or downlink transmission is based on the sub-frame granularity, the sidelink transmission is also based on the sub-frame granularity (special sub-frames in the TDD system are not used for the sidelink transmission). The NR system uses a flexible slot structure. That is, both uplink symbols and downlink symbols are included in one slot, which may achieve more flexible scheduling and reduce latency. A typical sub-frame in the NR system is shown in FIG. 7. Downlink (DL) symbols, uplink (UL) symbols and flexible symbols are included in one slot. The downlink symbols are located at the start of the slot, the uplink symbols are located at the end of the slot, and there are the flexible symbols between the downlink symbols and the uplink symbols. The number of various symbols in each slot is configurable.

The sidelink transmission system may share a carrier with the cellular system. In this case, the sidelink transmission may only use uplink transmission resources of the cellular system. For NR-V2X, if the sidelink transmission is still required to occupy all time domain symbols in a slot, the network needs to configure a slot with all uplink symbols for the sidelink transmission, which will have a great impact on the uplink and downlink data transmission of the NR system, and reduce the performance of the system. Therefore, in NR-V2X, part of the time domain symbols in a slot are supported for sidelink transmission. That is, part of the uplink symbols in a slot are used for the sidelink transmission. In addition, it is considered that AGC symbols and GP symbols are included in the sidelink transmission. If the number of uplink symbols available for the sidelink transmission is few, after the AGC symbols and GP symbols are removed, the remaining symbols available for transmitting valid data are even fewer. In this way, the resource utilization rate is very low. Therefore, the time domain symbols occupied by the sidelink transmission in NR-V2X are at least 7 (including GP symbols). In a case where the sidelink transmission system uses a dedicated carrier, there is no problem of sharing transmission resources with other systems, and all symbols in the slot are configured for the sidelink transmission.

As mentioned above, in NR-V2X, the starting point and length of the time domain symbols for the sidelink transmission in one slot are configured through the parameters (the starting symbol position (sl-StartSymbol) and the number of symbols (sl-LengthSymbols)). The last symbol in the time domain symbols for the sidelink transmission is used as the GP, and the PSSCH and PSCCH can only use the remaining time domain symbols. However, if PSFCH transmission resources are configured in one slot, the PSSCH and PSCCH cannot occupy the time domain symbols for the PSFCH transmission, as well as the AGC and GP symbols before the symbols.

In NR-V2X system, the time domain resources in the resource pool are also indicated by a bitmap. Considering the flexible slot structure in the NR system, a length of the bitmap is also extended. The length of the supported bitmap is in a range of [10:160]. A manner of using the bitmap to determine a slot position belonging to the resource pool within a system frame number (SFN) period is the same as that in LTE-V2X, but there are two differences as follows:

the total number of slots included in one SFN period is $10240 \times 2^{\mu}$, where the parameter $\mu$ is related to a subcarrier spacing size; and

if at least one of time domain symbols $Y, Y + 1, Y + 2, ..., Y + X - 1$ included in one slot is not configured as an uplink symbol by TDD-UL-DL-ConfigCommon signaling of the network, the slot cannot be used for the sidelink transmission. $Y$ and $X$ represent sl-StartSymbol and sl-LengthSymbols respectively.

The specific steps include the following.

Step 1: slots that do not belong to the resource pool are removed in the SFN period, including synchronization slots and slots that cannot be used for the sidelink transmission. The remaining slots are denoted as a remaining slot set, and the remaining slots are renumbered as

$$\left( l_0, l_1, \cdots, l_{(10240 \times 2^{\mu} - N_{S\_SSB} - N_{nonSL} - 1)} \right).$$

Where:

$N_{S\_SSB}$ denotes the number of synchronization slots within one SFN period; the synchronization slots are determined according to configuration parameters related to synchronization, and are related to a period of transmission of synchronization signal blocks (SSBs) and the number of transmission resources of SSBs configured in the period; $N_{nonSL}$ denotes the number of slots that do not comply with the uplink symbol starting point and number configurations within one SFN period: if at least one of the time domain symbols $Y, Y + 1, Y + 2, ..., Y + X - 1$ included in one slot is not semi-statically configured as an uplink symbol, the slot cannot be used for the sidelink transmission. $Y$ and $X$ denote sl-StartSymbol and sl-LengthSymbols respectively.

Step 2: the number of reserved slots and corresponding time domain positions are determined.

If the number of slots in the remaining slot set cannot be divided evenly by the length of the bitmap, there is a need to determine the number of reserved slots and the corresponding time domain positions. Specifically, if one slot $l_r$ ($0 \leq r < 10240 \times 2^{\mu} - N_{S\_SSB} - N_{nonSL}$) meets the following condition, the slot is a reserved slot:

$$r = \left\lfloor \frac{m \cdot (10240 \times 2^{\mu} - N_{S\_SSB} - N_{nonSL})}{N_{reserved}} \right\rfloor$$

where:

$N_{reserved} = (10240 \times 2^{\mu} - N_{S\_SSB} - N_{nonSL}) \bmod L_{bitmap}$ denotes the number of reserved slots, $L_{bitmap}$ denotes the length of the bitmap, and $m = 0,..., N_{reserved} - 1$.

Step 3: the reserved slots are removed from the remaining slot set, the left slot set is represented as a logical slot set, and the slots in the slot set are slots that can be used for the resource poo. The slots in the logical slot set are renumbered as ( $t_0^{SL}, t_1^{SL}, \ldots, t_{T_{max}-1}^{SL}$ ), where, $T_{max} = 10240 \times 2^{\mu} - N_{S\_SSB} - N_{nonSL} - N_{reserved}$.

Step 4: the slots in the logical slot set that belong to the resource pool are determined according to the bitmap.

The bitmap in the resource pool configuration information is ($b_0, b_1,..., b_{L_{bitmap}-1}$). For a slot $t_k^{SL} \left( 0 \leq k < \left( 10240 \times 2^{\mu} - N_{S\_SSB} - N_{nonSL} - N_{reserved} \right) \right)$ in the logical slot set, in a case where $b_{k'} = 1$ is satisfied, the slot is a slot belonging to the resource pool, where $k' = k \bmod L_{bitmap}$.

Step 5: the slots belonging to the resource pool determined in step 4 are renumbered as $t'^{SL}_i$, and $i \in \{0, 1, ..., T'_{max} - 1\}$, where $T'_{max}$ denotes the number of slots included in the resource pool.

As shown in FIG. 8, one SFN period (or one direct frame number (DFN) period) includes 10240 sub-frames, a period of the synchronization signal is 160 ms, and two synchronization sub-frames are included in one synchronization period. Therefore, there are 128 synchronization sub-frames in one SFN period. The length of the bitmap used to indicate the time domain resources in the resource pool is 10 bits. Therefore, two reserved sub-frames are required. The number of remaining sub-frames is 10240-128-2=10110, which may be divided evenly by the length of the bitmap 10. The remaining sub-frames are renumbered as 0, 1, 2, ..., 10109. The first 3 bits of the bitmap are 1, and the remaining 7 bits are 0. That is, in the remaining sub-frames, the first 3 sub-frames in every 10 sub-frames belong to the resource pool, and the remaining sub-frames do not belong to the resource pool. The bitmap needs to be repeated 1011 times in the remaining sub-frames to indicate whether all sub-frames belong to the resource pool, and each bitmap period includes 3 sub-frames. Therefore, a total of 3033 sub-frames belong to the resource pool in one SFN period.

When the sidelink transmission is performed over unlicensed spectrum (SL-U), the sidelink transmission needs to meet specific regulatory requirements, including requirements of minimum occupied channel bandwidth (OCB) and maximum power spectral density (PSD). Regarding the requirement of OCB, when the UE uses the channel for data transmission, the occupied channel bandwidth shall not be less than 80% of one channel bandwidth. Regarding the requirement of the maximum power spectrum density, the power transmitted by the UE per 1 MHz shall not exceed 10 dBm. In order to meet the OCB and PSD regulatory requirements, an interlaced resource block (IRB) structure is required for sidelink transmission in the unlicensed spectrum. One IRB includes discrete N RBs in the frequency domain, and a total of M IRBs are included in the frequency band. RBs included in the m-th IRB are {m, M+m, 2M+m, 3M+m, ...}, where M and N are integers, and m is an integer greater than or equal to 0 and less than or equal to M.

As shown in FIG. 9, the system bandwidth includes 20 RBs, including 5 IRBs (i.e., M=5). Each IRB includes 4 RBs (i.e., N=4), and frequency domain intervals of every two adjacent RBs belonging to the same IRB are the same, that is, 5 RBs apart. The numbers in the boxes in the figure denote the IRB indices.

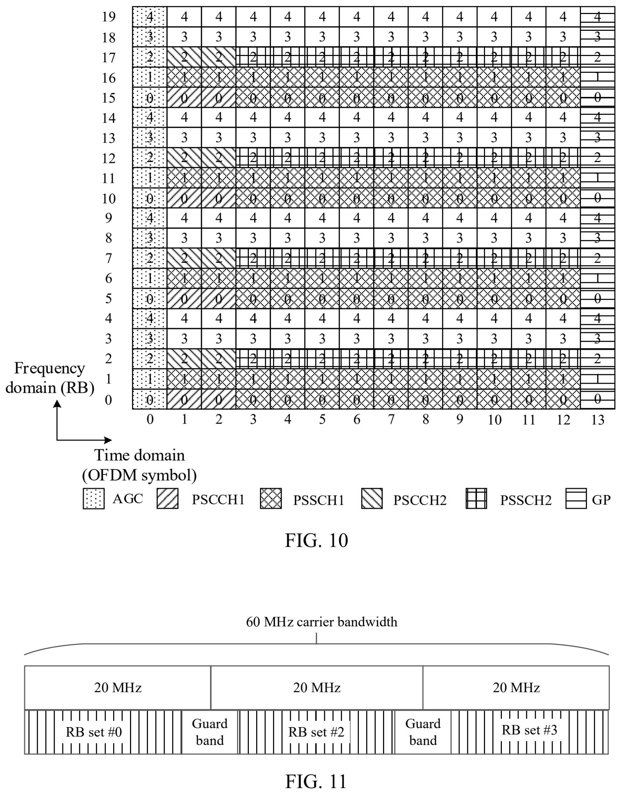

In the SL-U system, if the IRB-based resource allocation granularity is adopted, the PSCCH, the PSSCH and other channels in the SL-U system should be all based on the IRB structure. In this case, the frame structure in the SL-U system is shown in FIG. 10, and the numbers in the boxes demote IRB indices. FIG. 10 is a schematic diagram showing a frame structure in which a slot includes only PSCCH and PSSCH but does not include PSFCH. The bandwidth shown in FIG. 10 includes 20 RBs. 5 IRB resources are configured, that is, M=5. Each IRB resource includes 4 RBs. The numbers in the boxes denote IRB indices. In FIG. 10, the system configures PSCCH to occupy 1 IRB resource in the frequency domain and 2 OFDM symbols in the time domain. PSSCH takes IRB as the granularity. The first symbol in the slot is the AGC symbol, and the last symbol is the GP symbol. In FIG. 10, PSSCH1 occupies IRB#0 and IRB#1, and its corresponding PSCCH1 occupies IRB#0. PSSCH2 occupies IRB#2, and its corresponding PSCCH2 also occupies IRB#2. It should be noted that, for the sake of simplicity, FIG. 10 does not show the resources occupied by the second-order SCI and the resources occupied by the PSCCH DMRS and the PSSCH DMRS.

In the unlicensed spectrum, the UE accesses the channel through LBT, and LBT has a granularity of 20 MHz in the frequency domain. As shown in FIG. 11, each 20 MHz may be called one RB set, a carrier may include a plurality of RB sets, and there is a guard band (or guard period) between RB sets.

At present, the applications of sidelink communication are becoming more and more extensive. For example, in scenarios such as smart home and smart factory, the sidelink communication may be used for communication of wearable devices. In these scenarios, it is extremely important to ensure low cost and low power consumption of terminal devices. However, in existing sidelink communication systems, the terminal devices need to frequently detect first-order SCI and second-order SCI, and decode PSSCH based on the detection results. The power consumption of detecting the first-order SCI and the second-order SCI accounts for about 70% of the total power consumption in one slot. Therefore, how to reduce the power consumption of the UE in detecting the first-order SCI and/or the second-order SCI in the sidelink communication has become an urgent technical problem to be solved.

In order to solve one or more of the above technical problems, the present application provides a communication method and a communication device.

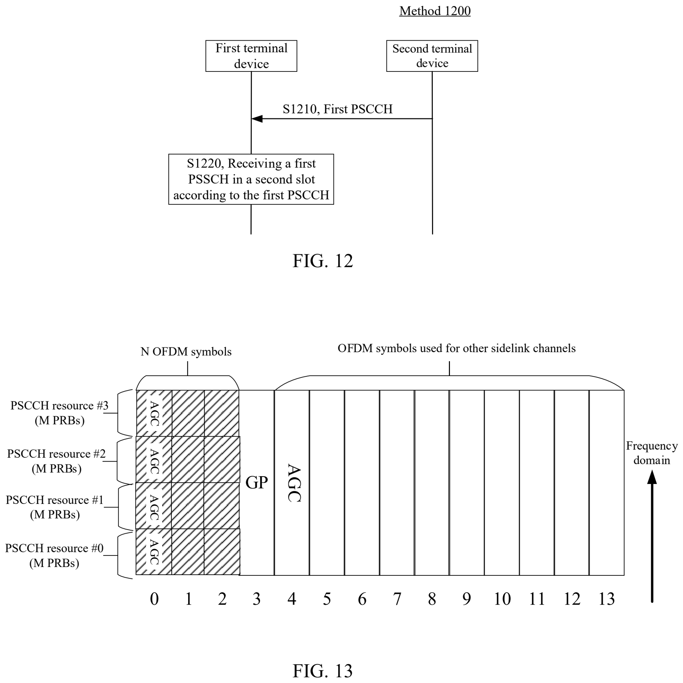

The embodiments of the present application are described in detail below with reference to FIGS. 12 to 16.

FIG. 12 is a schematic flowchart of a communication method in embodiments of the present application. The method 1200 shown in FIG. 12 may include steps S1210 and S1220, which are specifically as follows.

In S1210, a first terminal device receives, in a first slot, a first PSCCH transmitted by a second terminal device. The first PSCCH is used to schedule a first PSSCH.

The first terminal device may be a receiving UE, and the second terminal device may be a transmitting UE.

In S1220, the first terminal device receives, in a second slot according to the first PSCCH, the first PSSCH transmitted by the second terminal device.

An interval between the first slot and the second slot may be greater than or equal to X slots, X being a positive integer.

Optionally, the first terminal device may receive the first PSSCH in the second slot according to the first PSCCH, or may not receive the first PSSCH in the second slot according to the first PSCCH. For example, if the first PSCCH is successfully decoded, the first terminal device may receive the first PSSCH according to the decoding result of the first PSCCH. If the first PSCCH is not successfully decode, the first terminal device may not receive the first PSSCH according to the decoding result of the first PSCCH.

In the prior art, the first terminal device receives a PSCCH and a PSSCH scheduled by the PSCCH in one slot, and the first terminal device needs to receive and cache the PSCCH and the PSSCH in each slot. Therefore, more power is consumed. However, in the embodiments of the present application, the first terminal device may receive the first PSSCH in the second slot according to the first PSCCH. In this way, there is no need to cache the PSSCH in each slot, which helps to reduce the power consumption of the terminal device in sidelink communication.

Optionally, a duration for decoding the PSCCH by the first terminal device may be less than or equal to X slots. In the embodiments of the present application, if the first PSCCH is successfully decoded, the first terminal device may determine whether to receive the first PSSCH according to the decoding result of the first PSCCH without receiving the first PSSCH in each slot. Therefore, the power consumption of the terminal device may be reduced in the sidelink communication.

Optionally, X may be determined according to any of a standard (e.g., communication standard) definition, a network configuration, a pre-configuration, or a determination by the first terminal device.

In some embodiments, the first PSCCH may occupy specific frequency domain resources within specific OFDM symbols within a slot. For example, the first PSCCH may be transmitted through a first resource, and the first resource may occupy part of OFDM symbols in the first slot. Optionally, the first resource may belong to a dedicated sidelink resource pool or a dedicated sidelink bandwidth part (BWP).

Optionally, the part of OFDM symbols may be first N OFDM symbols in the first slot, or, the part of OFDM symbols may be last N OFDM symbols in the first slot, N being a positive integer. Optionally, if located at the beginning of the slot, the N OFDM symbols may include an OFDM symbol for AGC. If located at the end of the slot, the N OFDM symbols may include an OFDM symbol for transmitting/receiving transition. Optionally, N may be determined according to any one of a standard definition, a network configuration, or a pre-configuration. For example, N may be 2 or 3.

Optionally, the first resource may occupy M PRBs or M IRBs within the part of OFDM symbols, M being a positive integer. Optionally, M may be determined according to any one of a standard definition, a network configuration, or a pre-configuration. For example, M may be 10 (e.g., 10 PRBs) or 1 (e.g., 1 IRB).

There may be resources for PSSCH transmission within N symbols. If there are PSSCH resources, frequency domain resources where the PSSCH resources are located do not overlap with frequency domain resources for the PSCCH. OFDM symbols, other than the N OFDM symbols, in the slot may be used for other sidelink physical channels.

If the N OFDM symbols are located at the beginning of the slot, there may be a transmitting/receiving transition interval and an OFDM symbol for AGC between the N OFDM symbols and subsequent OFDM symbols in the slot. For example, as shown in FIG. 13, the first slot may include 14 OFDM symbols, and the part of OFDM symbols may be a first 3 (i.e., top 3) OFDM symbols in the first slot.

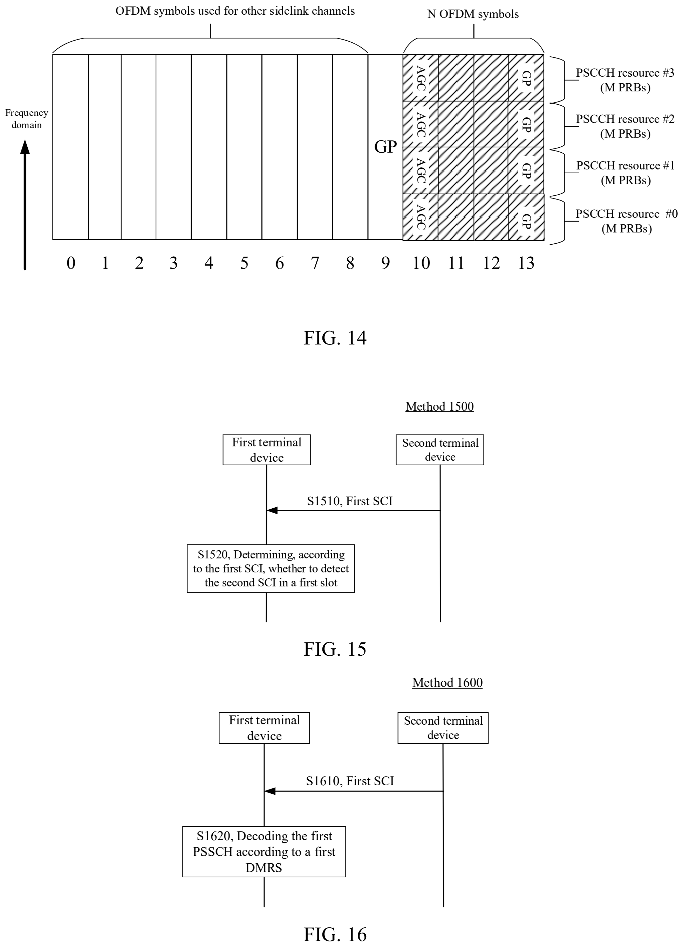

If the N OFDM symbols are located at the end of the slot, a transmitting/receiving transition interval may exist before the N OFDM symbols. As shown in FIG. 14, the first slot may include 14 OFDM symbols, and the part of OFDM symbols may be a last 3 (i.e., 3 at the end) OFDM symbols in the first slot.

In this case, the PSCCH resources may be configured more flexibly, which is suitable for application in a BWP or a resource pool where there is no backward UE. The backward UE may refer to a UE that does not support the PSCCH reception manner in the present application.

In some embodiments, the first resource may occupy OFDM symbols where a configured or preconfigured PSFCH is located in the first slot. The first resource may occupy M PRBs or IRBs in the OFDM symbols where the PSFCH is located in the first slot. Optionally, OFDM symbols where part or all of PSFCHs are located in a resource pool of the first slot may be used for the first resource.

Optionally, in the OFDM symbols where the PSFCH is located, the PRBs or IRBs for the PSCCH may be indicated by configuration or pre-configuration signaling, and the PRBs or IRBs for the PSFCH may also be indicated by configuration or pre-configuration signaling. Optionally, there is no overlap between a PRB/IRB set for the PSCCH and a PRB/IRB set for PSFCH.

In the above embodiments, the same resource pool may be shared with the backward UE.

In some embodiments, the second terminal device may occupy one or more first resources to transmit one first PSCCH. Optionally, the CRC of the first PSCCH may not be scrambled, or may be scrambled with an identification (ID) corresponding to the first terminal device. The ID corresponding to the first terminal device may be a UE ID or other ID corresponding to the first terminal device.

For example, if the PSCCH transmitted by the second terminal device is only for a specific receiving UE (e.g., unicast communication), the CRC of the PSCCH may be scrambled with an ID corresponding to the receiving UE. Otherwise, the CRC of the PSCCH may not be scrambled.

FIG. 15 is a schematic flowchart of a communication method according to an embodiment of the present application. The method 1500 shown in FIG. 15 may include steps S1510 and S1520, which are specifically as follows.

In S1510, a first terminal device detects, in a first slot, first SCI transmitted by a second terminal device.

The first terminal device may be a receiving UE, and the second terminal device may be a transmitting UE.

In S1520, the first terminal device determines, according to the first SCI, whether to detect second SCI transmitted by the second terminal device in the first slot.

The first SCI may be first-order SCI, and the second SCI may be second-order SCI. The first SCI may be carried in a PSCCH. The second SCI may be carried in a PSSCH. The PSCCH carrying the first SCI may be used to schedule the PSSCH carrying the second SCI.

Optionally, the PSCCH and a time-frequency resource multiplexing manner of the PSSCH scheduled by the PSCCH may be the same as described in the above embodiments (e.g., the embodiments corresponding to FIGS. 2 to 11). For example, the PSCCH and the PSSCH scheduled by the PSCCH are located in a same slot. Optionally, the PSCCH occupies part of PRBs or IRBs in part of OFDM symbols in the slot, and the PSCCH and the OFDM symbols scheduled by the PSCCH are frequency division multiplexed or time division multiplexed.

In some embodiments, a first field (e.g., one or more bits) in the first SCI may be used to indicate whether the second SCI needs to be detected.

Optionally, the second terminal device may determine the first field in the first SCI. For example, if the higher layer instructs the transmission of the second SCI, the second terminal device may set the first field in the first SCI to 1. Optionally, the second terminal device may determine, according to the first field in the first SCI, whether to transmit the second SCI in the first slot.

Accordingly, the first terminal device may determine, according to the first field in the first SCI, whether to detect the second SCI in the first slot. For example, if the first field in the first SCI is 1, the first terminal device may further detect the second SCI. Otherwise, the first terminal device does not detect the second SCI.

Optionally, the first field may include one or more bits in a reserved bit field in the first SCI. Alternatively, the first field may also include other fields or domains in the first SCI, which is not limited in the present application.

In some embodiments, a scrambling sequence for a DMRS of the PSCCH carrying the first SCI may be used to indicate whether the second SCI needs to be detected.

Optionally, the first SCI may be carried in the first PSCCH, and the second terminal device may determine the scrambling sequence used by the DMRS of the first PSCCH. For example, if a higher layer indicates a first scrambling sequence, the second terminal device may use the first scrambling sequence to transmit the DMRS of the PSCCH. Otherwise, the second terminal device randomly selects a scrambling sequence from $\{1, 1, 1\}$, $\{1, e^{j2/3\pi}, e^{-j2/3\pi}\}$, and $\{1, e^{-j2/3\pi}, e^{j2/3\pi}\}$ to transmit the DMRS of the PSCCH.

Accordingly, the first terminal device may determine, according to the scrambling sequence used for the DMRS of the first PSCCH, whether to detect the second SCI in the first slot. For example, if the DMRS of the first PSCCH uses the first scrambling sequence, the first terminal device may determine to detect the second SCI in the first slot. Otherwise, the first terminal device does not detect the second SCI.

Optionally, the first scrambling sequence may be one of $\{1, 1, 1\}$, $\{1, e^{j2/3\pi}, e^{-j2/3\pi}\}$, and $\{1, e^{-j2/3\pi}, e^{j2/3\pi}\}$. Optionally, the first scrambling sequence may be determined according to any one of a standard definition, a network configuration, a pre-configuration, a determination by the first terminal device, or a determination by the second terminal device.

In the embodiments of the present application, the first terminal device determines, according to the first SCI, whether to detect the second SCI. There is no need to detect the second SCI in each slot, which may reduce the power loss of the terminal device caused by detecting the second SCI. Therefore, the power consumption of the terminal device may be reduced in the sidelink communication. The method in the embodiments of the present application does not need to introduce a new PSCCH and makes minor changes to the standard. Moreover, this method facilitates sharing the same resource pool with backward UEs.

FIG. 16 is a schematic flowchart of a communication method in embodiments of the present application. The method 1600 shown in FIG. 16 may include steps S1610 and S1620, which are specifically as follows.

In S1610, a first terminal device receives, according to first information, a first PSSCH transmitted by a second terminal device.

The first terminal device may be a receiving UE, and the second terminal device may be a transmitting UE.

In S1620, the first terminal device decodes the first PSSCH according to a first DMRS.

Optionally, the first information may include one or more of: the first DMRS, time-frequency positions of the first DMRS, sidelink configuration authorization information, a size of frequency domain resources occupied by the first PSSCH, a modulation and coding scheme (MCS) used by the first PSSCH, a sequence corresponding to the first DMRS (e.g., a scrambling sequence corresponding to the first DMRS), time-frequency positions of the first DMRS, a code rate used by second SCI corresponding to the first PSSCH, and a size of a TB transmitted by the first PSSCH. Optionally, the sequence corresponding to the first DMRS may also be referred to as a sequence of the first DMRS or a first DMRS sequence. The sequence corresponding to the first DMRS may be known to the first terminal device.

Optionally, the sequence corresponding to the first DMRS may be a pseudo-random sequence obtained after initializing an identification corresponding to the first terminal device. Optionally, the time-frequency positions of the first DMRS may include resource elements (REs) indexed as #1, #3, #5, #7, #9, and #11 in the PRB.

Optionally, the first PSSCH may correspond to the first DMRS. Optionally, the first PSSCH and the first DMRS may belong to a mode 1 resource pool or a mode 2 resource pool.

In some embodiments, for a retransmission of one TB, the first terminal device may not receive the SCI (e.g., the first SCI and/or the second SCI).

Optionally, the first information may further include resource reservation information indicated by SCI previously received by the first terminal device (e.g., which may include reserved resources indicated by the first SCI and/or reserved resources indicated by the second SCI). The first PSSCH may be used to carry retransmission data.

For example, a new transmission and all retransmissions of one TB use the same MCS and the same number of DMRS symbols. If the first terminal device receives the first SCI that schedules one TB, for the reserved resources indicated by the first SCI, the first terminal device may directly decode the PSSCH when receiving the retransmission of the TB without detecting the first SCI. For another example, for the second terminal device, the second SCI transmitted to indicate the TB retransmission may include time-frequency positions of the reserved resources for the TB retransmission. The PSSCH carrying the second SCI and the retransmission TB at least corresponds to a DMRS sequence known to the first terminal device (e.g., a pseudo-random sequence initialized by the ID of the first terminal device used as a DMRS sequence), thereby ensuring that the first terminal device can still decode the PSSCH without decoding the first SCI.

Optionally, the first PSSCH and the first DMRS may belong to the mode 1 resource pool or the mode 2 resource pool.

For example, the first PSSCH and the first DMRS belong to the mode 1 resource pool or the mode 2 resource pool, and a reference signal for channel sensing in the resource pool is a DMRS of a PSCCH (that is, the DMRS of the PSCCH is used to measure a SL reference signal receiving power (RSRP) for channel sensing). In this case, the time-frequency positions occupied by the first DMRS sequence may be:

the same as time-frequency resource positions occupied by the DMRS of the PSSCH in the SL system in the embodiments corresponding to FIGS. 3 to 5. Or, the time-frequency positions occupied by the first DMRS sequence may be the same as time domain resource positions occupied by the DMRS of the PSSCH in the SL system in the embodiments corresponding to FIGS. 3 to 5, and the occupied RE positions are REs indexed as #1, #3, #5, #7, #9, and #11 in the PRB. Or, the time-frequency positions occupied by the first DMRS sequence may be different from the time-frequency resource positions occupied by the DMRS of the PSSCH in the SL system in the embodiments corresponding to FIGS. 3 to 5.

Optionally, the first PSSCH and the first DMRS may belong to the mode 2 resource pool.

For example, if the first PSSCH and the first DMRS belong to the mode 2 resource pool, and the reference signal for channel sensing in the resource pool is the DMRS of the PSSCH (that is, the DMRS of the PSSCH is used to measure the SL RSRP for channel sensing), the second terminal device needs to transmit the first SCI. In order to avoid the impact on channel sensing, at the time-frequency resource positions occupied by the DMRS of the PSSCH in the existing SL system, the second terminal device may additionally transmit the same PSSCH DMRS as that in the existing SL system. The time-frequency positions occupied by the first DMRS sequence may be:

the same as the time domain resource positions occupied by the DMRS of the PSSCH in the SL system in the embodiments corresponding to FIGS. 3 to 5, and the occupied RE positions are REs indexed as #1, #3, #5, #7, #9, and #11 in the PRB. Alternatively, the time-frequency positions occupied by the first DMRS sequence may be different from the time-frequency resource positions occupied by the DMRS of the PSSCH in the SL system in the embodiments corresponding to FIGS. 3 to 5.

In the above embodiments, the first terminal device receives the PSCCH that schedules the new transmission TB only in a specific time and frequency domain range, and does not need to detect the second SCI in each slot, which may reduce the power loss of the terminal device caused by detecting SCI. The specific time and frequency domain range is a subset of the receiving resource pool of the first terminal device, and the specific time and frequency domain range may be configured or pre-configured by a network.

In some embodiments, the first terminal device receives the PSSCH at time-frequency positions indicated by sidelink configuration authorization information (without receiving SCI).

Optionally, the sidelink configuration authorization information may be a sidelink configuration authorization that is configured by the second terminal device and received by the first terminal device. Optionally, the sidelink configuration authorization information may be a sidelink configuration authorization that is configured by the second terminal device and received by the first terminal device through a PC5 radio resource control (RRC) message or SCI.

Optionally, the sidelink configuration authorization information may include one or more of:

a configuration index of the sidelink configuration authorization (e.g., SL-ConfigIndexCG), a resource repetition period of the sidelink configuration authorization (e.g., sl-PeriodCG), a number of hybrid automatic repeat requests (HARQs) of the sidelink configuration authorization (e.g., sl-NrOfHARQ-Processes), a maximum number of transmissions of one TB transmission in the sidelink configuration authorization (e.g., sl-CG-MaxTransNum), time domain resources within a period of the sidelink configuration authorization (e.g., sl-TimeResourceCG), frequency domain resources within a period of the sidelink configuration authorization (e.g., sl-FreqResourceCG), and an identification of a resource pool where the sidelink configuration authorization is located (e.g., sl-ResourcePoolID).

The PSSCH transmitted using the sidelink configuration authorization corresponds to at least the DMRS sequence known to the first terminal device (e.g., the pseudo-random sequence initialized by the ID of the first terminal device used as the DMRS sequence). In this way, it may be ensured that the first terminal device can still decode the PSSCH without decoding the first SCI.

Optionally, the first PSSCH and the first DMRS may belong to the mode 1 resource pool.

For example, the second terminal device may not transmit the first SCI, and each time-frequency resource indicated in the sidelink configuration authorization is entirely used to transmit PSSCH. The DMRS of the PSSCH may be generated by a sequence generated by the ID corresponding to the first terminal device (e.g., the pseudo-random sequence initialized by the ID corresponding to the first terminal device).

Optionally, the first PSSCH and the first DMRS may belong to the mode 2 resource pool.

For example, the first PSSCH and the first DMRS belong to the mode 2 resource pool, the reference signal for channel sensing in the resource pool is the DMRS of the PSCCH (that is, the DMRS of the PSCCH is used to measure the SL RSRP for channel sensing), and the second terminal device needs to transmit the first SCI. In this case, the time-frequency positions occupied by the first DMRS sequence may be:

the same as the time-frequency resource positions occupied by the DMRS of the PSSCH in the SL system in the embodiments corresponding to FIGS. 3 to 5. Or, the time-frequency positions occupied by the first DMRS sequence may be the same as the time domain resource positions occupied by the DMRS of the PSSCH in the SL system in the embodiments corresponding to FIGS. 3 to 5, and the occupied RE positions are REs indexed as #1, #3, #5, #7, #9, and #11 in the PRB. Or, the time-frequency positions occupied by the first DMRS sequence may be different from the time-frequency resource positions occupied by the DMRS of the PSSCH in the SL system in the embodiments corresponding to FIGS. 3 to 5.

Optionally, the first PSSCH and the first DMRS may belong to the mode 2 resource pool.

For example, if the first PSSCH and the first DMRS belong to the mode 2 resource pool, and the reference signal for channel sensing in the resource pool is the DMRS of the PSSCH (that is, the DMRS of the PSSCH is used to measure the SL RSRP for channel sensing), the second terminal device needs to transmit the first SCI. In order to avoid the impact on channel sensing, at the time-frequency resource positions occupied by the DMRS of the PSSCH in the existing SL system, the second terminal device may additionally transmit the same PSSCH DMRS as that in the existing SL system. The time-frequency positions occupied by the first DMRS sequence may be:

the same as the time domain resource positions occupied by the DMRS of the PSSCH in the SL system in the embodiments corresponding to FIGS. 3 to 5, and the occupied RE positions are REs indexed as #1, #3, #5, #7, #9, and #11 in the PRB. Alternatively, the time-frequency positions occupied by the first DMRS sequence may be different from the time-frequency resource positions occupied by the DMRS of the PSSCH in the SL system in the embodiments corresponding to FIGS. 3 to 5.

In the above embodiments, the first terminal device receives the PSCCH only at the time-frequency positions indicated by the sidelink configuration authorization information, and does not need to detect the first SCI in each slot, thereby reducing the power loss of the terminal device caused by detecting the SCI.

In some embodiments, the first terminal device only receives a specific first PSSCH without receiving the first SCI.

The specific first PSSCH may refer to a PSSCH that satisfies at least one of:

the size of the frequency domain resource occupied by the first PSSCH, the MCS used by the first PSSCH, the sequence corresponding to the first DMRS (e.g., the scrambling sequence corresponding to the first DMRS), the time-frequency positions of the first DMRS, the code rate used by the second SCI (e.g., the second-order SCI) corresponding to the first PSSCH, and the size of the TB transmitted by the first PSSCH.

For example, if the first information includes the size of frequency domain resources occupied by the first PSSCH, the first terminal device may only receive a PSSCH matching the size of the frequency domain resources indicated by the first information. Alternatively, if the first information includes the code rate used by the second SCI corresponding to the first PSSCH, and the size of the TB transmitted by the first PSSCH, the first terminal device may only receive a PSSCH matching the code rate used by the second SCI and the size of the transmitted TB that are indicated by the first information.

The specific first PSSCH corresponds to at least the DMRS sequence known to the first terminal device (e.g., the pseudo-random sequence initialized by the ID of the first terminal device used as the DMRS sequence), thereby ensuring that the first terminal device can still decode the PSSCH without decoding the first SCI.

Optionally, the first PSSCH and the first DMRS may belong to the mode 1 resource pool.

For example, the second terminal device may not transmit the first SCI, and each time-frequency resource indicated in the sidelink configuration authorization is entirely used to transmit PSSCH. The DMRS of the PSSCH may be generated by a sequence generated by the ID corresponding to the first terminal device (e.g., the pseudo-random sequence initialized by the ID corresponding to the first terminal device).

Optionally, the first PSSCH and the first DMRS may belong to the mode 2 resource pool.

For example, if the first PSSCH and the first DMRS belong to the mode 2 resource pool, and the reference signal for channel sensing in the resource pool is the DMRS of the PSCCH that is, the DMRS of the PSCCH is used to measure the SL RSRP for channel sensing), the second terminal device needs to transmit the first SCI. The time-frequency positions occupied by the first DMRS sequence may be:

the same as the time-frequency resource positions occupied by the DMRS of the PSSCH in the SL system in the embodiments corresponding to FIGS. 3 to 5. Or, the time-frequency positions occupied by the first DMRS sequence may be the same as the time domain resource positions occupied by the DMRS of the PSSCH in the SL system in the embodiments corresponding to FIGS. 3 to 5, and the occupied RE positions are REs indexed as #1, #3, #5, #7, #9, and #11 in the PRB. Or, the time-frequency positions occupied by the first DMRS sequence may be different from the time-frequency resource positions occupied by the DMRS of the PSSCH in the SL system in the embodiments corresponding to FIGS. 3 to 5.

Optionally, the first PSSCH and the first DMRS may belong to the mode 2 resource pool.

For example, if the first PSSCH and the first DMRS belong to the mode 2 resource pool, and the reference signal for channel sensing in the resource pool is the DMRS of the PSSCH (that is, the DMRS of the PSSCH is used to measure the SL RSRP for channel sensing), the second terminal device needs to transmit the first SCI. In order to avoid the impact on channel sensing, at the time-frequency resource positions occupied by the DMRS of the PSSCH in the existing SL system, the second terminal device may additionally transmit the same PSSCH DMRS as that in the existing SL system. The time-frequency positions occupied by the first DMRS sequence may be:

the same as the time domain resource positions occupied by the DMRS of the PSSCH in the SL system in the embodiments corresponding to FIGS. 3 to 5, and the occupied RE positions are REs indexed as #1, #3, #5, #7, #9, and #11 in the PRB. Alternatively, the time-frequency positions occupied by the first DMRS sequence may be different from the time-frequency resource positions occupied by the DMRS of the PSSCH in the SL system in the embodiments corresponding to FIGS. 3 to 5.

In the above embodiments, the first terminal device only receives the specific PSCCH and does not need to detect the first SCI in each slot, which may reduce the power loss of the terminal device caused by detecting the SCI.

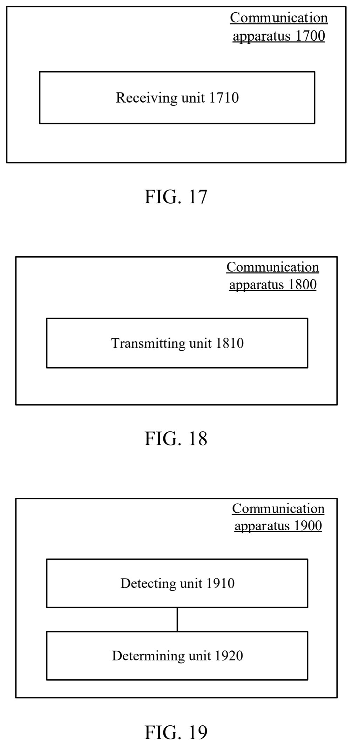

The method embodiments of the present application are described in detail above in combination with FIGS. 1 to 16, and apparatus embodiments of the present application will be described in detail below in combination with FIGS. 17 to 23. It should be understood that the description of the method embodiments corresponds to the description of the apparatus embodiments. Therefore, parts not described in detail may refer to the previous method embodiments.

FIG. 17 is a schematic diagram showing a structure of a communication apparatus provided in an embodiment of the present application. As shown in FIG. 17, the apparatus 1700 includes a receiving unit 1710, which is specifically as follows:

the receiving unit 1710 is configured to receive a first PSCCH in a first slot, and the first PSCCH is used to schedule a first PSSCH; and

the receiving unit 1710 is configured to receive the first PSSCH in a second slot according to the first PSCCH;

where an interval between the first slot and the second slot is greater than or equal to X slots, and X is a positive integer.

Optionally, a duration for decoding a PSCCH by the apparatus is less than or equal to X slots.

Optionally, X is determined according to any one of a standard definition, a network configuration, a pre-configuration, or a determination by the apparatus.

Optionally, the first PSCCH is transmitted through a first resource, and the first resource occupies part of orthogonal frequency division multiplexing (OFDM) symbols in the first slot.

Optionally, the part of OFDM symbols is first N OFDM symbols in the first slot, or the part of OFDM symbols is last N OFDM symbols in the first slot, and N is a positive integer.

Optionally, N is determined according to any one of a standard definition, a network configuration, or a pre-configuration.

Optionally, the first resource occupies M physical resource blocks (PRBs) or M interlaced resource blocks (IRBs) in the part of OFDM symbols, and M is a positive integer.

Optionally, M is determined according to any one of a standard definition, a network configuration, or a pre-configuration.

Optionally, the first resource belongs to a dedicated sidelink resource pool or a dedicated sidelink bandwidth part (BWP).

Optionally, the first resource occupies OFDM symbols where a configured or pre-configured physical sidelink feedback channel (PSFCH) is located in the first slot.

Optionally, OFDM symbols where part or all of PSFCHs are located in a resource pool of the first slot are used for the first resource.

FIG. 18 is a schematic diagram showing a structure of a communication apparatus provided in an embodiment of the present application. A communication apparatus 1800 in FIG. 18 includes a transmitting unit 1810, which is specifically as follows:

the transmitting unit 1810 is configured to transmit a first PSCCH in a first slot, and the first PSCCH is used to schedule a first PSSCH; and

the transmitting unit 1810 is configured to transmit the first PSSCH in a second slot;

where an interval between the first slot and the second slot is greater than or equal to X slots, and X is a positive integer.

Optionally, X is determined according to any one of a standard definition, a network configuration, a pre-configuration, or a determination by a first terminal device. The first PSSCH is transmitted to the first terminal device.

Optionally, the first PSCCH is transmitted through a first resource, and the first resource occupies part of orthogonal frequency division multiplexing (OFDM) symbols in the first slot.

Optionally, the part of OFDM symbols is first N OFDM symbols in the first slot, or the part of OFDM symbols is last N OFDM symbols in the first slot, and N is a positive integer.

Optionally, N is determined according to any one of a standard definition, a network configuration, or a pre-configuration.

Optionally, the first resource occupies M PRBs or M IRBs in the part of OFDM symbols, and M is a positive integer.

Optionally, M is determined according to any one of a standard definition, a network configuration, or a pre-configuration.

Optionally, the first resource belongs to a dedicated sidelink resource pool or a dedicated sidelink bandwidth part (BWP).

Optionally, the first resource occupies OFDM symbols where a configured or pre-configured physical sidelink feedback channel (PSFCH) is located in the first slot.

Optionally, OFDM symbols where part or all of PSFCHs are located in a resource pool of the first slot are used for the first resource.

FIG. 19 is a schematic diagram showing a structure of a communication apparatus provided in an embodiment of the present application. A communication apparatus 1900 in FIG. 19 includes a detecting unit 1910 and a determining unit 1920, which are specifically as follows:

the detecting unit 1910 is configured to detect first SCI in a first slot; and

the determining unit 1920 is configured to determine, according to the first SCI, whether to detect second SCI in the first slot.

Optionally, the determining unit 1920 is specifically configured to determine, according to a first field in the first SCI, whether to detect the second SCI in the first slot.

Optionally, the first field includes one or more bits in a reserved bit field.

Optionally, the first SCI is carried in a first PSCCH, and the determining unit is specifically configured to determine, according to a scrambling sequence used for a DMRS of the first PSCCH, whether to detect the second SCI in the first slot.

Optionally, the determining unit 1920 is specifically configured to determine to detect the second SCI in the first slot if the DMRS of the first PSCCH uses a first scrambling sequence.

Optionally, the first scrambling sequence is determined according to any one of a standard definition, a network configuration, a pre-configuration, a determination by the apparatus, or a determination by a second terminal device. The first SCI is transmitted by the second terminal device.

Optionally, the first SCI is first-order SCI, and the second SCI is second-order SCI.

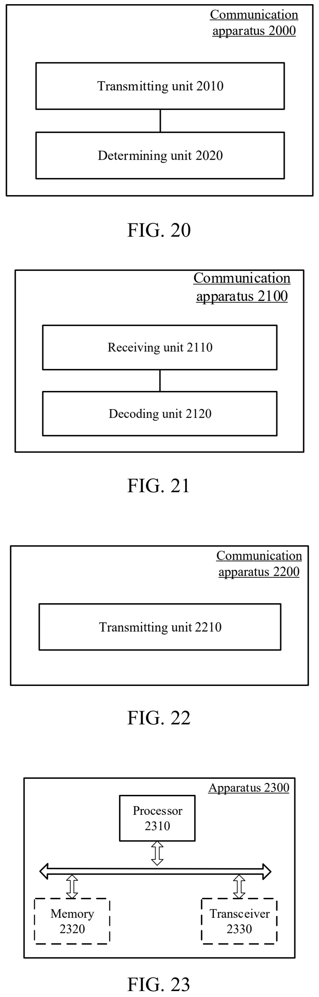

FIG. 20 is a schematic diagram showing a structure of a communication apparatus provided in an embodiment of the present application. A communication apparatus 2000 in FIG. 20 includes a transmitting unit 2010 and a determining unit 2020, which are specifically as follows:

the transmitting unit 2010 is configured to transmit first SCI in a first slot; and

the determining unit 2020 is configured to determine, according to the first SCI, whether to transmit second SCI in the first slot.

Optionally, the determining unit 2020 is specifically configured to determine, according to a first field in the first SCI, whether to transmit the second SCI in the first slot.

Optionally, the first field includes one or more bits in a reserved bit field.

Optionally, the first SCI is carried in a first PSCCH, and the determining unit is specifically configured to determine, according to a scrambling sequence used for a DMRS of the first PSCCH, whether to transmit the second SCI in the first slot.

Optionally, the determining unit 2020 is specifically configured to determine to transmit the second SCI in the first slot if the DMRS of the first PSCCH uses a first scrambling sequence.

Optionally, the first scrambling sequence is determined according to any one of a standard definition, a network configuration, a pre-configuration, a determination by a first terminal device, or a determination by the apparatus. The first SCI is transmitted to the first terminal device.

Optionally, the first SCI is first-order SCI, and the second SCI is second-order SCI.

FIG. 21 is a schematic diagram showing a structure of a communication apparatus provided in an embodiment of the present application. A communication apparatus 2100 in FIG. 21 includes a receiving unit 2110 and a decoding unit 2120, which are specifically as follows:

the receiving unit 2110 is configured to receive a first PSSCH according to first information, and the first PSSCH corresponds to a first DMRS; and
the decoding unit 2120 is configured to decode the first PSSCH according to the first DMRS;
where the first information includes one or more of: the first DMRS, time-frequency positions of the first DMRS, sidelink configuration authorization information, a size of frequency domain resources occupied by the first PSSCH, an MCS used by the first PSSCH, a sequence corresponding to the first DMRS, time-frequency positions of the first DMRS, a code rate used by second-order sidelink control information (SCI) corresponding to the first PSSCH, and a size of a transport block (TB) transmitted by the first PSSCH.

Optionally, the sequence corresponding to the first DMRS is a pseudo-random sequence obtained after initializing an identification corresponding to the apparatus.

Optionally, the first PSSCH and the first DMRS belong to a mode 1 resource pool or a mode 2 resource pool.

Optionally, the time-frequency positions of the first DMRS includes resource elements (REs) indexed as #1, #3, #5, #7, #9, and #11 in a PRB.

Optionally, the first information further includes resource reservation information indicated by SCI previously received by the apparatus, and the first PSSCH is used to carry retransmission data.

Optionally, the sidelink configuration authorization information is a sidelink configuration authorization that is configured by the second terminal device and received by the apparatus.

Optionally, the sidelink configuration authorization information is the sidelink configuration authorization that is configured by the second terminal device and received by the apparatus through a PC5 radio resource control (RRC) message or SCI.

Optionally, the sidelink configuration authorization information includes one or more of:
a configuration index of the sidelink configuration authorization, a resource repetition period of the sidelink configuration authorization, a number of hybrid automatic repeat requests (HARQs) of the sidelink configuration authorization, a maximum number of transmissions of a TB in the sidelink configuration authorization, time domain resources within a period of the sidelink configuration authorization, frequency domain resources within a period of the sidelink configuration authorization, and an identification of a resource pool where the sidelink configuration authorization is located.

FIG. 22 is a schematic diagram showing a structure of a communication apparatus provided in an embodiment of the present application. A communication apparatus 2200 in FIG. 22 includes a transmitting unit 2210, which is specifically as follows:

the transmitting unit 2210 is configured to transmit a first PSSCH according to first information, where the first PSSCH corresponds to a first DMRS; and
the first information includes one or more of: the first DMRS, time-frequency positions of the first DMRS, sidelink configuration authorization information, a size of frequency domain resources occupied by the first PSSCH, an MCS used by the first PSSCH, a sequence corresponding to the first DMRS, time-frequency positions of the first DMRS, a code rate used by second-order sidelink control information (SCI) corresponding to the first PSSCH, and a size of a TB transmitted by the first PSSCH.

Optionally, the sequence corresponding to the first DMRS is a pseudo-random sequence obtained after initializing an identification corresponding to a first terminal device, and the first PSSCH is transmitted to the first terminal device.

Optionally, the first PSSCH and the first DMRS belong to a mode 1 resource pool or a mode 2 resource pool.

Optionally, the time-frequency positions of the first DMRS include REs indexed as #1, #3, #5, #7, #9, and #11 in a PRB.

Optionally, the first information further includes resource reservation information indicated by SCI previously transmitted by the apparatus, and the first PSSCH is used to carry retransmission data.

Optionally, the sidelink configuration authorization information is a sidelink configuration authorization that is configured by the apparatus to the first terminal device.

Optionally, the sidelink configuration authorization information is the sidelink configuration authorization that is configured by the apparatus through a PC5 RRC message or SCI to the first terminal device.

Optionally, the sidelink configuration authorization information includes one or more of:

a configuration index of the sidelink configuration authorization, a resource repetition period of the sidelink configuration authorization, a number of hybrid automatic repeat requests (HARQs) of the sidelink configuration authorization, a maximum number of transmissions of a TB in the sidelink configuration authorization, time domain resources within a period of the sidelink configuration authorization, frequency domain resources within a period of the sidelink configuration authorization, and an identification of a resource pool where the sidelink configuration authorization is located.

FIG. 23 is a schematic diagram showing a structure of an apparatus provided in an embodiment of the present application. The dashed lines in FIG. 23 indicate that the units or modules are optional. The apparatus 2300 may be configured to implement the method described in the above method embodiments. The apparatus 2300 may be a chip or a communication apparatus.

The apparatus 2300 may include one or more processors 2310. The processor 2310 may support the apparatus 2300 to implement the method described in the above method embodiments. The processor 2310 may be a general-purpose processor or a special-purpose processor. For example, the processor may be a central processing unit (CPU). Alternatively, the processor may be other general-purpose processor, a digital signal processor (DSP), an application specific integrated circuit (ASIC), a field programmable gate array (FPGA) or other programmable logic device, a discrete gate or transistor logic device, a discrete hardware component, or the like. The general-purpose processor may be a microprocessor, or the processor may be any conventional processor or the like.

The apparatus 2300 may further include one or more memories 2320. The memory 2320 stores a program. The program may be executed by the processor 2310, so that the processor 2310 perform the method described in the above method embodiments. The memory 2320 may be independent of the processor 2310 or may be integrated into the processor 2310.

The apparatus 2300 may further include a transceiver 2330. The processor 2310 may communicate with other devices or chips through the transceiver 2330. For example, the processor 2310 may transmit and receive data from other devices or chips through the transceiver 2330.

The embodiments of the present application further provide a computer-readable storage medium for storing a program. The computer-readable storage medium may be applied to the communication apparatus provided in the embodiments of the present application, and the program causes a computer to perform the method performed by the communication apparatus in various embodiments of the present application.

The embodiments of the present application further provide a computer program product. The computer program product includes a program. The computer program product may be applied to the communication apparatus provided in the embodiments of the present application, and the program causes a computer to perform the method performed by the communication apparatus in various embodiments of the present application.

The embodiments of the present application further provide a computer program. The computer program may be applied to the communication apparatus provided in the embodiments of the present application, and the computer program causes a computer to perform the method performed by the communication apparatus in various embodiments of the present application.

It should be understood that in the embodiments of the present application, "B corresponding to A" means that B is associated with A, and B may be determined based on A. However, it should also be understood that determining B based on A does not mean determining B based solely on A. B may be determined based on A and/or other information.

It should be understood that the term "and/or" in the present application used to describe an association relationship between associated objects, for example, to indicate that there may be three relationships between the related objects. For example, "A and/or B" may represent: A alone, both A and B, and B alone. In addition, the character "/" herein generally indicates that related objects before and after this character are in an "or" relationship.

It should be understood that in the various embodiments of the present application, a size of a serial number of each of the above processes does not mean an order of execution. The order of execution of each process shall be determined by its functions and internal logic, and shall not constitute any limitation on the implementation process of the embodiments of the present application.

In the several embodiments provided by the application, it should be understood that, the disclosed systems, apparatus, and method may be implemented in other ways. For example, the apparatus embodiments described above are only schematic. For example, division of the units is only division of logical functions, and there may be other division manners in an actual implementation. For example, a plurality of units or components may be combined or integrated into another system, or some features may be ignored or not performed. In addition, the coupling or direct coupling or communicative connection between each other as shown or discussed may be indirect coupling or communicative connection of apparatuses or units via some interfaces, which may be electrical, mechanical, or in other forms.

The units illustrated as separate components may be or may not be physically separated, and the components shown as units may be or may not be physical units. That is, they may be located in one place, or may be distributed onto a plurality of network units. Part or all of the units may be selected according to actual needs to implement the purpose of the schemes of the embodiments.

In addition, the various functional units in the various embodiments of the present application may be integrated into one processing unit, or the various units may exist physically separately, or two or more units may be integrated into one unit.

The above embodiments may be implemented in whole or in part through software, hardware, firmware, or any combination thereof. In a case where the embodiments are implemented using a software program, the software program may be implemented in a form of a computer program product in whole or in part. The computer program product includes one or more computer instructions. When computer program instructions are loaded on and executed by a computer, processes or functions according to the embodiments of the present application are generated in whole or in part. The computer may be a general-purpose computer, a dedicated computer, a computer network, or any other programmable device. The computer instructions may be stored in a computer-readable storage medium or transmitted from a computer-readable storage medium to another computer-readable storage medium. For example, the computer instructions may be transmitted from a website, computer, server or data center to another website, computer, server or data center via a wired manner (such as coaxial cable, optical fiber, or digital subscriber line (DSL)) or a wireless manner (such as infrared, wireless or microwave). The computer-readable storage medium may be any available medium able to be accessed by the computer, or may be a data storage device (such as a server or a data center) integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of the claims.

**Claims**

1. A communication method, comprising:

   receiving, by a first terminal device, a first physical sidelink control channel (PSCCH) in a first slot, wherein the first PSCCH is used to schedule a first physical sidelink shared channel (PSSCH); and
   receiving, by the first terminal device, the first PSSCH in a second slot according to the first PSCCH, wherein an interval between the first slot and the second slot is greater than or equal to X slots, X being a positive integer.

2. The method according to claim 1, wherein a duration for decoding a PSCCH by the first terminal device is less than or equal to X slots.

3. The method according to claim 1 or 2, wherein X is determined according to any one of a standard definition, a network configuration, a pre-configuration, or a determination by the first terminal device.

4. The method according to any one of claims 1 to 3, wherein the first PSCCH is transmitted through a first resource, and the first resource occupies part of orthogonal frequency division multiplexing (OFDM) symbols in the first slot.

5. The method according to claim 4, wherein the part of OFDM symbols is first N OFDM symbols in the first slot, or the part of OFDM symbols is last N OFDM symbols in the first slot, N being a positive integer.

6. The method according to claim 5, wherein N is determined according to any one of a standard definition, a network configuration, or a pre-configuration.

7. The method according to any one of claims 4 to 6, wherein the first resource occupies M physical resource blocks (PRBs) or M interlaced resource blocks (IRBs) in the part of OFDM symbols, M being a positive integer.

8. The method according to claim 7, wherein M is determined according to any one of a standard definition, a network configuration, or a pre-configuration.

9. The method according to any one of claims 4 to 8, wherein the first resource belongs to a dedicated sidelink resource pool or a dedicated sidelink bandwidth part (BWP).

10. The method according to any one of claims 4 to 9, wherein the first resource occupies OFDM symbols where a configured or pre-configured physical sidelink feedback channel (PSFCH) is located in the first slot.

11. The method according to claim 10, wherein OFDM symbols where part or all of PSFCHs are located in a resource pool of the first slot are used for the first resource.

12. A communication method, comprising:

transmitting, by a second terminal device, a first physical sidelink control channel (PSCCH) in a first slot, wherein the first PSCCH is used to schedule a first physical sidelink shared channel (PSSCH); and
transmitting, by the second terminal device, the first PSSCH in a second slot, wherein
an interval between the first slot and the second slot is greater than or equal to X slots, X being a positive integer.

13. The method according to claim 12, wherein X is determined according to any one of a standard definition, a network configuration, a pre-configuration, or a determination by a first terminal device; and
the first PSSCH is transmitted to the first terminal device.

14. The method according to claim 12 or 13, wherein the first PSCCH is transmitted through a first resource, and the first resource occupies part of orthogonal frequency division multiplexing (OFDM) symbols in the first slot.

15. The method according to claim 14, wherein the part of OFDM symbols is first N OFDM symbols in the first slot, or the part of OFDM symbols is last N OFDM symbols in the first slot, N being a positive integer.

16. The method according to claim 15, wherein N is determined according to any one of a standard definition, a network configuration, or a pre-configuration.

17. The method according to any one of claims 14 to 16, wherein the first resource occupies M physical resource blocks (PRBs) or M interlaced resource blocks (IRBs) in the part of OFDM symbols, M being a positive integer.

18. The method according to claim 17, wherein M is determined according to any one of a standard definition, a network configuration, or a pre-configuration.

19. The method according to any one of claims 14 to 18, wherein the first resource belongs to a dedicated sidelink resource pool or a dedicated sidelink bandwidth part (BWP).

20. The method according to any one of claims 14 to 19, wherein the first resource occupies OFDM symbols where a configured or pre-configured physical sidelink feedback channel (PSFCH) is located in the first slot.

21. The method according to claim 20, wherein OFDM symbols where part or all of PSFCHs are located in a resource pool of the first slot are used for the first resource.

22. A communication method, comprising:

detecting, by a first terminal device, first sidelink control information (SCI) in a first slot; and
determining, by the first terminal device, according to the first SCI, whether to detect second SCI in the first slot.

23. The method according to claim 22, wherein determining, by the first terminal device, according to the first SCI, whether to detect the second SCI in the first slot comprises:
determining, by the first terminal device, according to a first field in the first SCI, whether to detect the second SCI in the first slot.

24. The method according to claim 23, wherein the first field comprises one or more bits in a reserved bit field.

25. The method according to claim 22, wherein the first SCI is carried in a first physical sidelink control channel (PSCCH), and determining, by the first terminal device, according to the first SCI, whether to detect the second SCI in the first slot comprises:
determining, by the first terminal device, according to a scrambling sequence used for a demodulation reference signal (DMRS) of the first PSCCH, whether to detect the second SCI in the first slot.

26. The method according to claim 25, wherein determining, by the first terminal device, according to the scrambling sequence used for the DMRS of the first PSCCH, whether to detect the second SCI in the first slot comprises:
if the DMRS of the first PSCCH uses a first scrambling sequence, determining, by the first terminal device, to detect the second SCI in the first slot.

27. The method according to claim 26, wherein the first scrambling sequence is determined according to any one of a standard definition, a network configuration, a pre-configuration, a determination by the first terminal device, or a determination by a second terminal device; and
the first SCI is transmitted by the second terminal device.

28. The method according to any one of claims 22 to 27, wherein the first SCI is first-order SCI, and the second SCI is second-order SCI.

29. A communication method, comprising:

transmitting, by a second terminal device, first sidelink control information (SCI) in a first slot; and
determining, by the second terminal device, according to the first SCI, whether to transmit second SCI in the first slot.

30. The method according to claim 29, wherein determining, by the second terminal device, according to the first SCI, whether to transmit the second SCI in the first slot comprises:
determining, by the second terminal device, according to a first field in the first SCI, whether to transmit the second SCI in the first slot.

31. The method according to claim 30, wherein the first field comprises one or more bits in a reserved bit field.

32. The method according to claim 29, wherein the first SCI is carried in a first physical sidelink control channel (PSCCH), and determining, by the second terminal device, according to the first SCI, whether to transmit the second SCI in the first slot comprises:
determining, by the second terminal device, according to a scrambling sequence used for a demodulation reference signal (DMRS) of the first PSCCH, whether to transmit the second SCI in the first slot.

33. The method according to claim 32, wherein determining, by the second terminal device, according to the scrambling sequence used for the DMRS of the first PSCCH, whether to transmit the second SCI in the first slot comprises:
if the DMRS of the first PSCCH uses a first scrambling sequence, determining, by the second terminal device, to transmit the second SCI in the first slot.

34. The method according to claim 33, wherein the first scrambling sequence is determined according to any one of a standard definition, a network configuration, a pre-configuration, a determination by a first terminal device, or a determination by the second terminal device; and
the first SCI is transmitted to the first terminal device.

35. The method according to any one of claims 29 to 34, wherein the first SCI is first-order SCI, and the second SCI is second-order SCI.

36. A communication method, comprising:

receiving, by a first terminal device, a first physical sidelink shared channel (PSSCH) according to first information, wherein the first PSSCH corresponds to a first demodulation reference signal (DMRS); and
decoding, by the first terminal device, the first PSSCH according to the first DMRS, wherein
the first information comprises one or more of: the first DMRS, time-frequency positions of the first DMRS, sidelink configuration authorization information, a size of frequency domain resources occupied by the first PSSCH, a modulation and coding scheme (MCS) used by the first PSSCH, a sequence corresponding to the first DMRS, time-frequency positions of the first DMRS, a code rate used by second-order sidelink control information (SCI) corresponding to the first PSSCH, and a size of a transport block (TB) transmitted by the first PSSCH.

37. The method according to claim 36, wherein the sequence corresponding to the first DMRS is a pseudo-random sequence obtained after initializing an identification corresponding to the first terminal device.

38. The method according to claim 36 or 37, wherein the first PSSCH and the first DMRS belong to a mode 1 resource pool or a mode 2 resource pool.

39. The method according to claim 38, wherein the time-frequency positions of the first DMRS comprises resource elements (Res) indexed as #1, #3, #5, #7, #9, and #11 in a physical resource block (PRB).

40. The method according to any one of claims 36 to 39, wherein the first information further comprises resource reservation information indicated by SCI previously received by the first terminal device, and the first PSSCH is used to carry retransmission data.

41. The method according to any one of claims 36 to 39, wherein the sidelink configuration authorization information is a sidelink configuration authorization that is configured by a second terminal device and received by the first terminal device.

42. The method according to claim 41, wherein the sidelink configuration authorization information is the sidelink configuration authorization that is configured by the second terminal device and received by the first terminal device through a PC5 radio resource control (RRC) message or SCI.

43. The method according to claim 41 or 42, wherein the sidelink configuration authorization information comprises one or more of:
a configuration index of the sidelink configuration authorization, a resource repetition period of the sidelink configuration authorization, a number of hybrid automatic repeat requests (HARQs) of the sidelink configuration authorization, a maximum number of transmissions of a TB in the sidelink configuration authorization, time domain resources within a period of the sidelink configuration authorization, frequency domain resources within a period of the sidelink configuration authorization, and an identification of a resource pool where the sidelink configuration authorization is located.

44. A communication method, comprising:

transmitting, by a second terminal device, a first physical sidelink shared channel (PSSCH) according to first information, wherein the first PSSCH corresponds to a first demodulation reference signal (DMRS), wherein the first information comprises one or more of: the first DMRS, time-frequency positions of the first DMRS, sidelink configuration authorization information, a size of frequency domain resources occupied by the first PSSCH, a modulation and coding scheme (MCS) used by the first PSSCH, a sequence corresponding to the first DMRS, time-frequency positions of the first DMRS, a code rate used by second-order sidelink control information (SCI) corresponding to the first PSSCH, and a size of a transport block (TB) transmitted by the first PSSCH.

45. The method according to claim 44, wherein the sequence corresponding to the first DMRS is a pseudo-random sequence obtained after initializing an identification corresponding to a first terminal device, and the first PSSCH is transmitted to the first terminal device.

46. The method according to claim 44 or 45, wherein the first PSSCH and the first DMRS belong to a mode 1 resource pool or a mode 2 resource pool.

47. The method according to claim 46, wherein the time-frequency positions of the first DMRS comprise resource elements (REs) indexed as #1, #3, #5, #7, #9, and #11 in a physical resource block (PRB).

48. The method according to any one of claims 44 to 47, wherein the first information further comprises resource reservation information indicated by SCI previously transmitted by the second terminal device, and the first PSSCH is used to carry retransmission data.

49. The method according to any one of claims 44 to 47, wherein the sidelink configuration authorization information is a sidelink configuration authorization that is configured by the second terminal device to a first terminal device.

50. The method according to claim 49, wherein the sidelink configuration authorization information is the sidelink configuration authorization that is configured by the second terminal device through a PC5 radio resource control (RRC) message or SCI to the first terminal device.

51. The method according to claim 49 or 50, wherein the sidelink configuration authorization information comprises one or more of:
a configuration index of the sidelink configuration authorization, a resource repetition period of the sidelink configuration authorization, a number of hybrid automatic repeat requests (HARQs) of the sidelink configuration authorization, a maximum number of transmissions of a TB in the sidelink configuration authorization, time domain resources within a period of the sidelink configuration authorization, frequency domain resources within a period of the sidelink configuration authorization, and an identification of a resource pool where the sidelink configuration authorization is located.

52. A communication apparatus, comprising:

a receiving unit, wherein the receiving unit is configured to receive a first physical sidelink control channel (PSCCH) in a first slot, and the first PSCCH is used to schedule a first physical sidelink shared channel (PSSCH); and
the receiving unit is configured to receive the first PSSCH in a second slot according to the first PSCCH, wherein an interval between the first slot and the second slot is greater than or equal to X slots, X being a positive integer.

53. The apparatus according to claim 52, wherein a duration for decoding a PSCCH by the apparatus is less than or equal to X slots.

54. The apparatus according to claim 52 or 53, wherein X is determined according to any one of a standard definition, a network configuration, a pre-configuration, or a determination by the apparatus.

55. The apparatus according to any one of claims 52 to 54, wherein the first PSCCH is transmitted through a first resource, and the first resource occupies part of orthogonal frequency division multiplexing (OFDM) symbols in the first slot.

56. The apparatus according to claim 55, wherein the part of OFDM symbols is first N OFDM symbols in the first slot, or the part of OFDM symbols is last N OFDM symbols in the first slot, N being a positive integer.

57. The apparatus according to claim 56, wherein N is determined according to any one of a standard definition, a network configuration, or a pre-configuration.

58. The apparatus according to any one of claims 55 to 57, wherein the first resource occupies M physical resource blocks (PRBs) or M interlaced resource blocks (IRBs) in the part of OFDM symbols, M being a positive integer.

59. The apparatus according to claim 58, wherein M is determined according to any one of a standard definition, a network configuration, or a pre-configuration.

60. The apparatus according to any one of claims 55 to 59, wherein the first resource belongs to a dedicated sidelink resource pool or a dedicated sidelink bandwidth part (BWP).

61. The apparatus according to any one of claims 55 to 60, wherein the first resource occupies OFDM symbols where a configured or pre-configured physical sidelink feedback channel (PSFCH) is located in the first slot.

62. The apparatus according to claim 61, wherein OFDM symbols where part or all of PSFCHs are located in a resource pool of the first slot are used for the first resource.

63. A communication apparatus, comprising:

a transmitting unit, wherein the transmitting unit is configured to transmit a first physical sidelink control channel (PSCCH) in a first slot, and the first PSCCH is used to schedule a first physical sidelink shared channel (PSSCH); and
the transmitting unit is configured to transmit the first PSSCH in a second slot, wherein
an interval between the first slot and the second slot is greater than or equal to X slots, X being a positive integer.

64. The apparatus according to claim 63, wherein X is determined according to any one of a standard definition, a network configuration, a pre-configuration, or a determination by a first terminal device; and
the first PSSCH is transmitted to the first terminal device.

65. The apparatus according to claim 63 or 64, wherein the first PSCCH is transmitted through a first resource, and the first resource occupies part of orthogonal frequency division multiplexing (OFDM) symbols in the first slot.

66. The apparatus according to claim 65, wherein the part of OFDM symbols is first N OFDM symbols in the first slot, or the part of OFDM symbols is last N OFDM symbols in the first slot, N being a positive integer.

67. The apparatus according to claim 66, wherein N is determined according to any one of a standard definition, a network configuration, or a pre-configuration.

68. The apparatus according to any one of claims 65 to 67, wherein the first resource occupies M physical resource blocks (PRBs) or M interlaced resource blocks (IRBs) in the part of OFDM symbols, M being a positive integer.

69. The apparatus according to claim 68, wherein M is determined according to any one of a standard definition, a network configuration, or a pre-configuration.

70. The apparatus according to any one of claims 65 to 69, wherein the first resource belongs to a dedicated sidelink resource pool or a dedicated sidelink bandwidth part (BWP).

71. The apparatus according to any one of claims 65 to 70, wherein the first resource occupies OFDM symbols where a configured or pre-configured physical sidelink feedback channel (PSFCH) is located in the first slot.

72. The apparatus according to claim 71, wherein OFDM symbols where part or all of PSFCHs are located in a resource pool of the first slot are used for the first resource.

73. A communication apparatus, comprising:

    a detecting unit, configured to detect first sidelink control information (SCI) in a first slot; and
    a determining unit, configured to determine, according to the first SCI, whether to detect second SCI in the first slot.

74. The apparatus according to claim 73, wherein the determining unit is specifically configured to determine, according to a first field in the first SCI, whether to detect the second SCI in the first slot.

75. The apparatus according to claim 74, wherein the first field comprises one or more bits in a reserved bit field.

76. The apparatus according to claim 73, wherein the first SCI is carried in a first physical sidelink control channel (PSCCH), and the determining unit is specifically configured to determine, according to a scrambling sequence used for a demodulation reference signal (DMRS) of the first PSCCH, whether to detect the second SCI in the first slot.

77. The apparatus according to claim 76, wherein the determining unit is specifically configured to determine to detect the second SCI in the first slot if the DMRS of the first PSCCH uses a first scrambling sequence.

78. The apparatus according to claim 77, wherein the first scrambling sequence is determined according to any one of a standard definition, a network configuration, a pre-configuration, a determination by the apparatus, or a determination by a second terminal device; and the first SCI is transmitted by the second terminal device.

79. The apparatus according to any one of claims 73 to 78, wherein the first SCI is first-order SCI, and the second SCI is second-order SCI.

80. A communication apparatus, comprising:

    a transmitting unit, configured to transmit first sidelink control information (SCI) in a first slot; and
    a determining unit, configured to determine, according to the first SCI, whether to transmit second SCI in the first slot.

81. The apparatus according to claim 80, wherein the determining unit is specifically configured to determine, according to a first field in the first SCI, whether to transmit the second SCI in the first slot.

82. The apparatus according to claim 81, wherein the first field comprises one or more bits in a reserved bit field.

83. The apparatus according to claim 80, wherein the first SCI is carried in a first physical sidelink control channel (PSCCH), and the determining unit is specifically configured to determine, according to a scrambling sequence used for a demodulation reference signal (DMRS) of the first PSCCH, whether to transmit the second SCI in the first slot.

84. The apparatus according to claim 83, wherein the determining unit is specifically configured to determine to transmit the second SCI in the first slot if the DMRS of the first PSCCH uses a first scrambling sequence.

85. The apparatus according to claim 84, wherein the first scrambling sequence is determined according to any one of a standard definition, a network configuration, a pre-configuration, a determination by a first terminal device, or a determination by the apparatus; and the first SCI is transmitted to the first terminal device.

86. The apparatus according to any one of claims 80 to 85, wherein the first SCI is first-order SCI, and the second SCI is second-order SCI.

87. A communication apparatus, comprising:

a receiving unit, configured to receive a first physical sidelink shared channel (PSSCH) according to first information, wherein the first PSSCH corresponds to a first demodulation reference signal (DMRS); and
a decoding unit, configured to decode the first PSSCH according to the first DMRS, wherein
the first information comprises one or more of: the first DMRS, time-frequency positions of the first DMRS, sidelink configuration authorization information, a size of frequency domain resources occupied by the first PSSCH, a modulation and coding scheme (MCS) used by the first PSSCH, a sequence corresponding to the first DMRS, time-frequency positions of the first DMRS, a code rate used by second-order sidelink control information (SCI) corresponding to the first PSSCH, and a size of a transport block (TB) transmitted by the first PSSCH.

88. The apparatus according to claim 87, wherein the sequence corresponding to the first DMRS is a pseudo-random sequence obtained after initializing an identification corresponding to the apparatus.

89. The apparatus according to claim 87 or 88, wherein the first PSSCH and the first DMRS belong to a mode 1 resource pool or a mode 2 resource pool.

90. The apparatus according to claim 89, wherein the time-frequency positions of the first DMRS comprises resource elements (REs) indexed as #1, #3, #5, #7, #9, and #11 in a physical resource block (PRB).

91. The apparatus according to any one of claims 87 to 90, wherein the first information further comprises resource reservation information indicated by SCI previously received by the apparatus, and the first PSSCH is used to carry retransmission data.

92. The apparatus according to any one of claims 87 to 90, wherein the sidelink configuration authorization information is a sidelink configuration authorization that is configured by a second terminal device and received by the apparatus.

93. The apparatus according to claim 92, wherein the sidelink configuration authorization information is the sidelink configuration authorization that is configured by the second terminal device and received by the apparatus through a PC5 radio resource control (RRC) message or SCI.

94. The apparatus according to claim 92 or 93, wherein the sidelink configuration authorization information comprises one or more of:
a configuration index of the sidelink configuration authorization, a resource repetition period of the sidelink configuration authorization, a number of hybrid automatic repeat requests (HARQs) of the sidelink configuration authorization, a maximum number of transmissions of a TB in the sidelink configuration authorization, time domain resources within a period of the sidelink configuration authorization, frequency domain resources within a period of the sidelink configuration authorization, and an identification of a resource pool where the sidelink configuration authorization is located.

95. A communication apparatus, comprising:

a transmitting unit, configured to transmit a first physical sidelink shared channel (PSSCH) according to first information, wherein the first PSSCH corresponds to a first demodulation reference signal (DMRS), wherein the first information comprises one or more of: the first DMRS, time-frequency positions of the first DMRS, sidelink configuration authorization information, a size of frequency domain resources occupied by the first PSSCH, a modulation and coding scheme (MCS) used by the first PSSCH, a sequence corresponding to the first DMRS, time-frequency positions of the first DMRS, a code rate used by second-order sidelink control information (SCI) corresponding to the first PSSCH, and a size of a transport block (TB) transmitted by the first PSSCH.

96. The apparatus according to claim 95, wherein the sequence corresponding to the first DMRS is a pseudo-random sequence obtained after initializing an identification corresponding to a first terminal device, and the first PSSCH is transmitted to the first terminal device.

97. The apparatus according to claim 95 or 96, wherein the first PSSCH and the first DMRS belong to a mode 1 resource pool or a mode 2 resource pool.

98. The apparatus according to claim 97, wherein the time-frequency positions of the first DMRS comprise resource elements (REs) indexed as #1, #3, #5, #7, #9, and #11 in a physical resource block (PRB).

99. The apparatus according to any one of claims 95 to 98, wherein the first information further comprises resource reservation information indicated by SCI previously transmitted by the apparatus, and the first PSSCH is used to carry retransmission data.

100. The apparatus according to any one of claims 95 to 98, wherein the sidelink configuration authorization information is a sidelink configuration authorization that is configured by the apparatus to a first terminal device.

101. The apparatus according to claim 100, wherein the sidelink configuration authorization information is the sidelink configuration authorization that is configured by the apparatus through a PC5 radio resource control (RRC) message or SCI to the first terminal device.

102. The apparatus according to claim 100 or 101, wherein the sidelink configuration authorization information comprises one or more of:

a configuration index of the sidelink configuration authorization, a resource repetition period of the sidelink configuration authorization, a number of hybrid automatic repeat requests (HARQs) of the sidelink configuration authorization, a maximum number of transmissions of a TB in the sidelink configuration authorization, time domain resources within a period of the sidelink configuration authorization, frequency domain resources within a period of the sidelink configuration authorization, and an identification of a resource pool where the sidelink configuration authorization is located.

103. A communication apparatus, comprising a memory, a transceiver and a processor, wherein the memory is configured to store a program, the processor receives and transmits data through the transceiver, and the processor is configured to call the program in the memory to cause the communication apparatus to perform the method according to any one of claims 1 to 51.

104. A communication apparatus, comprising a processor, wherein the processor is configured to call a program from a memory to cause the communication apparatus to perform the method according to any one of claims 1 to 51.

105. A chip, comprising a processor, wherein the processor is configured to call a program from a memory to cause a device equipped with the chip to perform the method according to any one of claims 1 to 51.

106. A computer-readable storage medium, storing a program thereon, wherein the program causes a computer to perform the method according to any one of claims 1 to 51.

**107.**

A computer program product, comprising a program, wherein the program causes a computer to perform the method according to any one of claims 1 to 51.

**108.**

A computer program, wherein the computer program causes a computer to perform the method according to any one of claims 1 to 51.

FIG. 1

FIG. 2

FIG. 3

FIG. 4

RE#0  RE#1  RE#2  RE#3  RE#4  RE#5  RE#6  RE#7  RE#8  RE#9  RE#10 RE#11

FIG. 5

FIG. 6

FIG. 7

One SFN period, 10240 sub-frames

Reserved sub-frame

Sub-frame in the resource pool

FIG. 8

FIG. 9

FIG. 10

FIG. 11

Method 1200

```
┌──────────────┐                    ┌──────────────┐
│ First terminal│                    │Second terminal│
│    device     │                    │    device     │
└──────┬───────┘                    └──────┬───────┘
       │                                   │
       │         S1210, First PSCCH        │
       │◄──────────────────────────────────│
       │                                   │
  ┌────┴──────────────┐                    │
  │ S1220, Receiving a first│              │
  │ PSSCH in a second slot  │              │
  │ according to the first PSCCH│          │
  └────┬──────────────┘                    │
       │                                   │
```

FIG. 12

N OFDM symbols

OFDM symbols used for other sidelink channels

PSCCH resource #3
(M PRBs)

PSCCH resource #2
(M PRBs)

PSCCH resource #1
(M PRBs)

PSCCH resource #0
(M PRBs)

AGC

AGC

AGC

AGC

GP

AGC

Frequency
domain

0  1  2  3  4  5  6  7  8  9  10  11  12  13

FIG. 13

OFDM symbols used for other sidelink channels    N OFDM symbols

Frequency domain

| | | | | | | | | | AGC | | | GP | PSCCH resource #3 (M PRBs) |

GP

PSCCH resource #3 (M PRBs)

PSCCH resource #2 (M PRBs)

PSCCH resource #1 (M PRBs)

PSCCH resource #0 (M PRBs)

0  1  2  3  4  5  6  7  8  9  10  11  12  13

## FIG. 14

Method 1500

First terminal device

Second terminal device

S1510, First SCI

S1520, Determining, according to the first SCI, whether to detect the second SCI in a first slot

## FIG. 15

Method 1600

First terminal device

Second terminal device

S1610, First SCI

S1620, Decoding the first PSSCH according to a first DMRS

## FIG. 16

Communication
apparatus 1700

Receiving unit 1710

FIG. 17

Communication
apparatus 1800

Transmitting unit 1810

FIG. 18

Communication
apparatus 1900

Detecting unit 1910

Determining unit 1920

FIG. 19

Communication
apparatus 2000

Transmitting unit 2010

Determining unit 2020

FIG. 20

Communication
apparatus 2100

Receiving unit 2110

Decoding unit 2120

FIG. 21

Communication
apparatus 2200

Transmitting unit 2210

FIG. 22

Apparatus 2300

Processor
2310

Memory
2320

Transceiver
2330

FIG. 23

## INTERNATIONAL SEARCH REPORT

| International application No. |
| --- |
| **PCT/CN2023/081718** |

**A. CLASSIFICATION OF SUBJECT MATTER**

H04W72/25(2023.01)i

According to International Patent Classification (IPC) or to both national classification and IPC

**B. FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

3GPP, CNTXT, ENTXTC, ENTXT: 不同, 时隙, 调度, 跨时隙, 省电, 节能, 功耗, 解码, 侧链路, 侧行, consumption, cross, different, decode, power, PSCCH, PSSCH, scheduling, slot, sidelink, SCI, OFDM

**C. DOCUMENTS CONSIDERED TO BE RELEVANT**

| Category* | Citation of document, with indication, where appropriate, of the relevant passages | Relevant to claim No. |
| --- | --- | --- |
| X | WO 2022027463 A1 (GUANGDONG OPPO MOBILE COMMUNICATIONS CO., LTD.) 10 February 2022 (2022-02-10) description, page 6, line 46 to page 13, line 12 | 1-21, 52-72, 103-108 |
| A | CN 111435909 A (HUAWEI TECHNOLOGIES CO., LTD.) 21 July 2020 (2020-07-21) entire document | 1-21, 52-72, 103-108 |
| A | US 2023057681 A1 (QUALCOMM INCORPORATED) 23 February 2023 (2023-02-23) entire document | 1-21, 52-72, 103-108 |
| A | WO 2022041190 A1 (QUALCOMM INCORPORATED) 03 March 2022 (2022-03-03) entire document | 1-21, 52-72, 103-108 |
| A | LG ELECTRONICS. "Discussion on Remaining Aspects of Sidelink Evaluation Methodology Update for Power Saving" *3GPP TSG RAN WG1 Meeting #103-e R1-2007894*, 13 November 2020 (2020-11-13), entire document | 1-21, 52-72, 103-108 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 October 2023** | **17 October 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/081718** |

**Box No. III      Observations where unity of invention is lacking (Continuation of item 3 of first sheet)**

This International Searching Authority found multiple inventions in this international application, as follows:

The technical solutions of a first group of independent claims (1, 12, 52 and 63) and corresponding parts of claims 103-108, the technical solutions of a second group of independent claims (22, 29, 73 and 80) and corresponding parts of claims 103-108, and a third group of independent claims (36, 44, 87 and 95) and corresponding parts of claims 103-108. The same or corresponding technical feature between the first group of claims and the second group of claims comprises: (1) a communication apparatus comprising functional units; the same or corresponding technical feature between the second group of claims and the third group of claims comprises: (1) a communication apparatus comprising functional units; and the same or corresponding technical features between the first group of claims and the third group of claims comprise: (1) a communication apparatus comprising functional units; and (2) sending and receiving a PSSCH. However, technical features (1) and (2) mentioned above are customary means in the art. Therefore, the above-mentioned three groups of claims do not have a same or corresponding special technical feature, and thus lack unity of invention (PCT Rule 13.1 and 13.2).

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-21 and 52-72, and corresponding parts of claims 103-108.**

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/CN2023/081718**

| Patent document cited in search report | | | Publication date (day/month/year) | Patent family member(s) | | | Publication date (day/month/year) |
|---|---|---|---|---|---|---|---|
| WO | 2022027463 | A1 | 10 February 2022 | CN | 115669093 | A | 31 January 2023 |
| CN | 111435909 | A | 21 July 2020 | WO | 2020143732 | A1 | 16 July 2020 |
| | | | | US | 2021329431 | A1 | 21 October 2021 |
| | | | | EP | 3883320 | A1 | 22 September 2021 |
| US | 2023057681 | A1 | 23 February 2023 | None | | | |
| WO | 2022041190 | A1 | 03 March 2022 | None | | | |

Form PCT/ISA/210 (patent family annex) (July 2022)